(19) Europäisches Patentamt

European Patent Office

Office européen des brevets

(11) **EP 1 181 628 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(21) Anmeldenummer: **00929530.4**

(22) Anmeldetag: **16.05.2000**

(51) Int Cl.⁷: **G05B 19/042**

(86) Internationale Anmeldenummer:
**PCT/EP00/04358**

(87) Internationale Veröffentlichungsnummer:
**WO 00/072098 (30.11.2000 Gazette 2000/48)**

(54) **VERFAHREN ZUM NICHTFLÜCHTIGEN SPEICHERN MINDESTENS EINES BETRIEBSDATENWERTS EINES ELEKTROMOTORS, UND ELEKTROMOTOR ZU DURCHFÜHRUNG EINES SOLCHEN VERFAHRENS**

METHOD FOR NONVOLATILE STORAGE OF AT LEAST ONE OPERATING DATA VALUE OF AN ELECTRICAL MOTOR AND ELECTRICAL MOTOR FOR SAID METHOD

PROCEDE POUR LA SAUVEGARDE NON VOLATILE D'AU MOINS UNE VALEUR DE DONNEES DE FONCTIONNEMENT D'UN MOTEUR ELECTRIQUE ET MOTEUR ELECTRIQUE POUR L'EXECUTION D'UN TEL PROCEDE

(84) Benannte Vertragsstaaten:
**AT BE CH CY DE DK ES FI FR GB GR IE IT LI LU MC NL PT SE**

(30) Priorität: **21.05.1999 DE 19923335**

(43) Veröffentlichungstag der Anmeldung:
**27.02.2002 Patentblatt 2002/09**

(73) Patentinhaber: **Papst-Motoren GmbH & Co. KG**
**78112 St. Georgen (DE)**

(72) Erfinder:
• **RAPPENECKER, Hermann**
**D-78147 Vöhrenbach (DE)**
• **JESKE, Frank**
**D-78112 St. Georgen (DE)**

• **HORNBERGER, Jörg**
**D-72280 Dornstetten (DE)**
• **KARWATH, Arno**
**D-78628 Rottweil (DE)**

(74) Vertreter: **Raible, Hans, Dipl.-Ing.**
**Schoderstrasse 10**
**70192 Stuttgart (DE)**

(56) Entgegenhaltungen:
EP-A- 0 780 962          WO-A-96/40558
DE-A- 19 810 222         US-A- 4 639 852
US-A- 4 920 305          US-A- 5 726 911

• PATENT ABSTRACTS OF JAPAN vol. 1997, no. 12, 25. Dezember 1997 (1997-12-25) & JP 09 220262 A (PARAMOUNT BED CO LTD), 26. August 1997 (1997-08-26)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum nichtflüchtigen Speichern mindestens eines Betriebsdatenwerts eines Elektromotors, welcher einen seine Kommutierung steuernden Mikroprozessor oder Mikrocontroller, im folgenden Mikroprozessor genannt, und einen nichtflüchtigen Speicher aufweist. Sie betrifft ferner einen Motor zur Durchführung eines solchen Verfahrens.

Aus der EP-A-0 780 962 kennt man einen elektronisch kommutierten Motor, dessen Kommutierung durch einen Mikroprozessor gesteuert wird, welchem ein flüchtiger Speicher zugeordnet ist. Bei diesem Motor ist außerhalb des Mikroprozessors ein Watchdog-Zeitglied vorgesehen, um auch in einer Umgebung mit starken elektrischen Störsignalen einen sicheren Betrieb des Motors zu gewährleisten.

Aus der US-A-5 726 911 kennt man ein Überwachungsgerät zur nachträglichen Montage auf einen Elektromotor. Dieses Überwachungsgerät enthält einen Mikrocontroller und dient dazu, kontaktlos Betriebsdatenwerte zu erfassen, z.B. den magnetischen Fluss und die Gehäusetemperatur des Motors, und diese Daten zunächst in einem RAM des Mikrocontrollers zu speichern und dann in ein EEPROM zu übertragen. Dabei werden in zeitlichen Abständen die im nichtflüchtigen Speicher gespeicherten Betriebsdatenwerte durch aktuelle Werte aus dem RAM ersetzt.

Aus der US-A-4 639 852 kennt man ein Multiprozessorsystem für eine Fabrik, dessen identische Prozessoren über eine Leitung mit einem übergeordneten Rechner verbunden sind, der einen nichtflüchtigen Speicher enthält. Jeder Prozessor hat ein gepuffertes RAM, in das beim Einschalten ein Alt-Betriebsdatenwert aus dem nichtflüchtigen Speicher übertragen und dort als Variable gespeichert wird. Diese Variable wird vom betreffenden Prozessor aktualisiert, und dieser schickt laufend wichtige Daten an den übergeordneten Rechner zurück, wo sie in dessen nichtflüchtigen Speicher geladen werden, damit bei einem Fehler eines Prozessors diese Daten zu einem Reserveprozessor übertragen werden können, der dann die Funktion des fehlerhaften Prozessors übernimmt.

Aus der US-A-4 920 305 kennt man einen elektrohydraulischen Servoantrieb für eine Dampfturbine, mit einem übergeordneten Mikroprozessor und einem diesem zugeordneten nichtflüchtigen Speicher, welcher die für eine Kalibrierung benötigten Betriebsdatenwerte enthält, sowie einem Mikrocontroller zum Durchführen der eigentlichen Kalibrierung und der Lageregelung eines Ventils. Bei der Kalibrierung werden die Werte für eine Leistung von 100 % (P100) und von 0 % (P0) im nichtflüchtigen Speicher gespeichert, und bei allen folgenden Einstellungen interpoliert der übergeordnete Mikroprozessor zwischen P0 und P100 und gibt einen entsprechenden Sollwert an den untergeordneten Mikrocontroller, der dann die Stellung des Ventils entsprechend regelt. Durch die automatische Kalibrierung kann eine erhebliche Menge an Arbeitszeit eingespart werden.

Es ist eine Aufgabe der Erfindung, ein Verfahren der eingangs genannten Art, und einen entsprechenden Elektromotor, bereitzustellen.

Diese Aufgabe wird gelöst durch ein Verfahren gemäß Anspruch 1. Man erreicht so, dass der für die Kommutierung zuständige Mikroprozessor mit weiteren nützlichen Vorgängen ausgelastet wird, nämlich mit der Aktualisierung der mindestens einen Betriebsvariablen, und dass diese Variable nur in entsprechenden zeitlichen Abständen zum nichtflüchtigen Speicher übertragen werden muss. Ein geeigneter zeitlicher Abstand sind z.B. Stundenbruchteile. Die Übertragung kann also relativ selten stattfinden und erfordert deshalb nicht viel Rechenzeicht. Trotzdem ergibt sich eine gute Genauigkeit der im nichtflüchtigen Speicher gespeicherten Daten, da Elektromotoren meist längere Zeit ununterbrochen laufen und sich dabei ihre Betriebsdaten nur wenig ändern.

Eine bevorzugte Weiterbildung der Erfindung ergibt sich durch ein Verfahren gemäß Anspruch 2. Durch die Aktualisierung der mindestens einen Betriebsvariablen in den Zeitbereichen zwischen Kommutierungsvorgängen wird der Mikroprozessor gut ausgenutzt.

Eine andere Lösung der gestellten Aufgabe ergibt sich durch den Gegenstand des Anspruchs 12. Ein solcher Motor enthält in seinem nichtflüchtigen Speicher Betriebsdatenwerte, die weitgehend aktuell sind und z. B. bei einem Defekt des Motors eine Rekonstruktion der Schadensursache ermöglichen,

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen.

Es zeigt:

Fig. 1      eine Gesamtübersicht einer erfindungsgemäßen Anordnung mit einem Elektromotor,

Fig. 2      ein Übersichtsschaltbild einer bevorzugten Ausführungsform mit einem elektronisch kommutierten Motor,

Fig. 3      beispielhafte Diagramme von in dem Dreiecksgenerator 100 der Fig. 2 auftretenden Spannungen und Signalen,

Fig. 4      ein schematisches Diagramm eines von einem Rotorstellungssensor 132 detektierten und an den µC 23 der Fig. 2 übergebenen Signals HALL,

Fig. 5      ein Übersichtsdiagramm der in Fig. 1 implementierten Fehlerfunktion 85 und Alarmfunktion 86,

Fig. 6     ein Hauptprogramm in Form eines Funktionsmanagers, wie er bevorzugt bei einem erfindungsgemäßen Motor verwendet werden kann,

Fig. 7     eine Darstellung eines Steuerworts mit acht Bit, welche dazu dienen, in dem Funktionsmanager der Fig. 6 die Ausführung von Funktionen anzufordem, bzw. diese Anforderungen zurückzusetzen,

Fig. 8     eine Tabelle mit Objekten, welche Parameter für den Motor 32 der Fig. 2 enthalten,

Fig. 9     ein Steuerwort DI_CTRL, welches von der Fehlerfunktion (Fig. 2 und 23) verwendet wird,

Fig. 10     ein Statuswort DI_STATE, welches von der Fehlerfunktion verwendet wird,

Fig. 11     einen Fehlercode DI_CODE, welcher von der Fehlerfunktion verwendet wird,

Fig. 12     ein Reaktionswort DI_REAC, welches von der Fehlerfunktion verwendet wird,

Fig. 13     ein Flußdiagramm der Funktion "Hall-Interrupt" der Fig. 6,

Fig. 14     ein Flußdiagramm der Funktion "TIMERØ-Interrupt" der Fig. 6,

Fig. 15     ein Flußdiagramm der Funktion "Betriebsdatenfunktion" der Fig. 6,

Fig. 16     ein Flußdiagramm der Funktion "A/D" der Fig. 6,

Fig. 17     ein Flußdiagramm der Funktion "Fehlererkennung" der Fig. 6,

Fig. 18     die Darstellung eines RAM-Bereichs des μC 23 der Fig. 2,

Fig. 19     ein Flußdiagramm einer Funktion "CHK_CALC" zur Berechnung eines Überprüfungswertes für die Speicherüberprüfung,

Fig. 20     ein Flußdiagramm einer Funktion "RAM_CHK_SET", welche dazu dient, einen Prüfwert RAM_CHK zu berechnen und an einer vorgegebenen Stelle eines RAM-Bereichs zu speichern,

Fig. 21     ein Flußdiagramm der Funktion "RAM_CHK_TEST" der Fig. 17, welche zur Speicherüberprüfung dient,

Fig. 22     ein Flußdiagramm einer Funktion "NEW_DIST", welches bei einem neuen Fehler aufgerufen wird,

Fig. 23     ein Flußdiagramm der Routine "Fehlerfunktion" der Fig. 1 und 6, und

Fig. 24     ein Flußdiagramm der Routine "COMM" der Fig. 6.

In den nachfolgenden Flußdiagrammen bedeutet Y = Ja und N = Nein. Gleiche oder gleichwirkende Teile werden mit denselben Bezugszeichen bezeichnet und gewöhnlich nur einmal beschrieben.

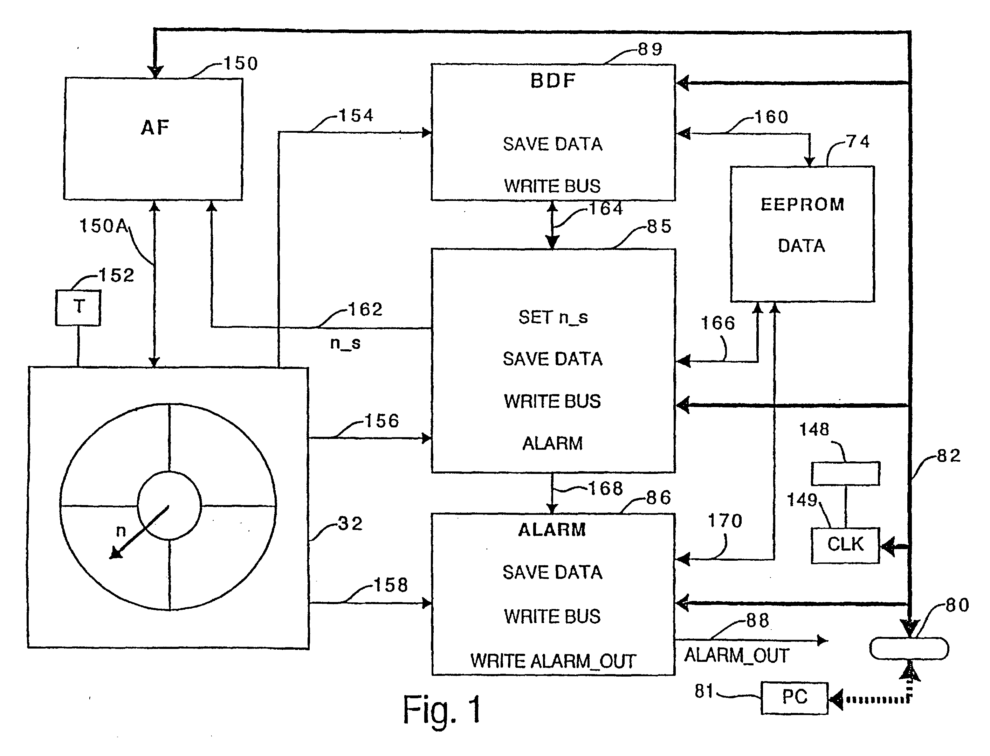

**Gesamtübersicht (Fig. 1)**

**Fig. 1** zeigt eine Übersicht über eine erfindungsgemäße Anordnung mit einem Elektromotor 32, der z.B. zum Antrieb eines Lüfters dient, wie in Fig. 1 angedeutet. Dem Elektromotor 32 sind eine Antriebsfunktion "AF" 150, ein Temperatursensor 152, eine Betriebsdatenfunktion "BDF" 89, eine Fehlerfunktion 85, eine Alarmfunktion "ALARM" 86, ein nichtflüchtiger Speicher 74 (z.B. ein EEPROM), ein Bus 82, ein Busanschluß 80, und eine Alarmausgabe ALARM_OUT 88 zugeordnet.

Der Temperatursensor 152 dient dazu, die Temperatur T am Motor 32, oder in dessen Nähe, zu messen, um ggf. abhängig von dieser Temperatur T Vorgänge zu steuern, z.B. eine von dieser Temperatur abhängige Drehzahl n_s des Motors 32 festzulegen oder ein Alarmsignal auszulösen, wenn diese Temperatur zu hoch wird, oder um die Höchstwerte dieser Temperatur zu speichern.

Die Antrisbsfunktion "AF" 150 sorgt dafür, daß der Elektromotor 32 in einer gewünschten Richtung und mit der gewünschten Drehzahl n_s läuft. Hierzu ist die Antriebsfunktion "AF" 150 über eine Verbindung 150A mit dem Elektromotor 32 verbunden. Die Antriebsfunktion kann z.B. als Kommutierungssteuerung eines elektronisch kommutierten Motors (ECM) 32 ausgebildet sein.

Die Antriebsfunktion 150 ist mit dem Bus 82 verbunden, der bidirektional ausgebildet ist. Der Bus 82 hat einen Anschluß (Interface) 80, an den z.B. ein PC 81 angeschlossen werden kann. Über den Bus 82 können die Antriebsfunktion "AF" 150, die Betriebsdatenfunktion "BDF" 89, die Fehlerfunktion 85 und die Alarmfunktion "ALARM" 86 konfiguriert werden, z.B. vom PC 81, oder von einem sonstigen Eingabegerät. Es können aber auch Daten von diesen Funktionen und vom EEPROM 74 auf den Bus 82 geschrieben und über diesen z.B. zum externen PC 81, oder zu einem anderen Motor, übertragen werden, z.B. die Zahl der Betriebsstunden des Motors 32, oder eine Information über aufgetretene Fehler, eine Extremtemperatur, eine zu hohe Betriebsspannung, etc.

Der Elektromotor 32 gibt über eine Verbindung 154 Betriebsdaten an die Betriebsdatenfunktion "BDF" 89. Diese kann die Betriebsdaten über eine Verbindung 160 in dem nichtflüchtigen Speicher 74 speichern ("SAVE DATA") oder auf den Bus 82 schreiben ("WRITE BUS"), so daß diese Daten über den Busanschluß 80 vom PC 81 gelesen werden können.

Ein Fehler im Elektromotor 32 wird über die Verbindung 156 der Fehlerfunktion 85 mitgeteilt. Letztere kann beim Auftreten eines Fehlers über eine Verbindung 162, die zur Antriebsfunktion "AF" 150 führt, die Solldrehzahl n_s verändern ("SET n_s"), über eine Verbindung 166 Daten über den Fehler und momentane Betriebsdaten, welche über eine Verbindung 164 von der Betriebsdatenfunktion "BDF" 89 erhältlich sind, in den nichtflüchtigen Speicher 74 schreiben ("SAVE_DATA"), über den Bus 82 Daten über den Fehler und momentane Betriebsdaten ausgeben ("WRITE BUS"), oder über eine Verbindung 168 einen Alarm in der Alarmfunktion 86 auslösen ("ALARM").

Die Alarmfunktion 86 bekommt entweder ein Signal über eine Verbindung 168 von der Fehlerfunktion 85, oder über eine Verbindung 158 ein Signal direkt vom Motor 32. Die Alarmfunktion kann über eine Verbindung 170 Daten über den Alarm und momentane Betriebsdaten in den nichtflüchtigen Speicher 74 ("SAVE DATA") schreiben, und/oder sie schreibt diese Daten auf den Bus 82 ("WRITE BUS"), und/oder sie gibt ein Signal über eine Leitung ALARM_OUT 88 aus ("WRITE ALARM_OUT").

Der nichtflüchtige Speicher 74 kann Daten enthalten, welche von den Funktionen 89, 85, 86 gespeichert worden sind und welche von diesen auch wieder ausgelesen und z.B. bei einer Anfrage über den Bus 82 ausgegeben werden können. Weiterhin kann der nichtflüchtige Speicher 74 Konfigurationsparameter für die Funktionen 150, 89, 85, 86 enthalten.

An den Bus 82 ist eine Uhr CLK 149 angeschlossen, die über eine Batterie 148 gepuffert ist und somit ständig läuft. Für einen I$^2$C-Bus 82 eignen sich z. B. folgende Typen: PCF8563, PCF8573 oder PCF8583. Mittels der Uhr 149 kann im EEPROM 74 die Uhrzeit gespeichert werden, bei der ein Fehler aufgetreten ist, ggf. auch das Datum.

Nachfolgend wird der Aufbau einer bevorzugten Anordnung gemäß Fig. 1 und eines bei ihr verwendeten Programms näher beschrieben.

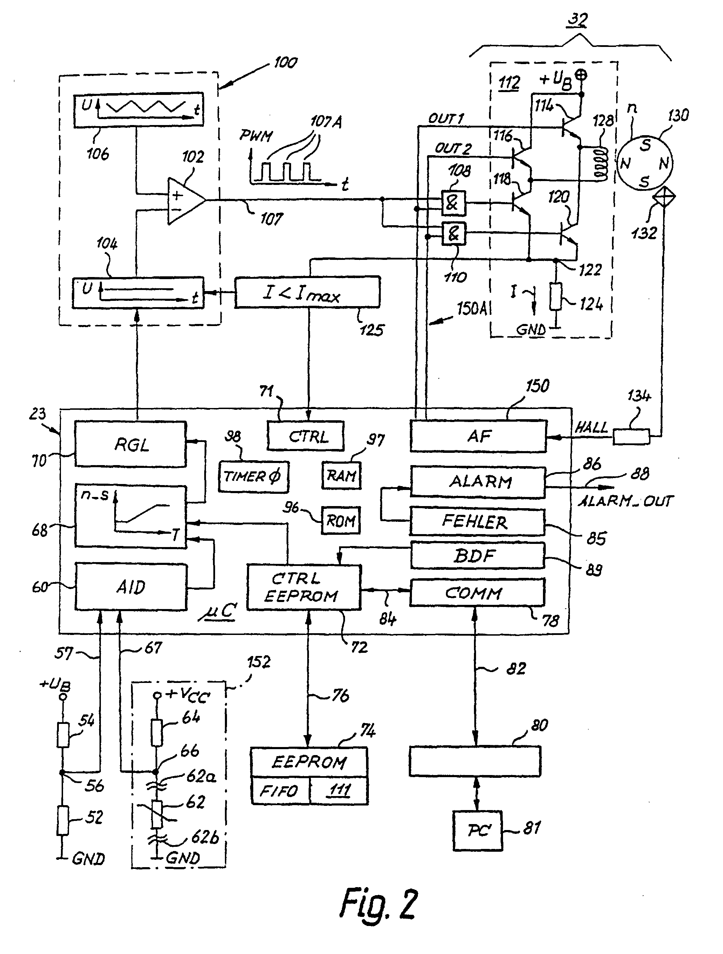

**Übersicht Motor (Fig. 2)**

**Fig. 2** zeigt eine Übersicht über ein bevorzugtes Ausführungsbeispiel eines erfindungsgemäßen elektronisch kommutierten Motors (ECM) 32. Dieser wird gesteuert mittels eines Mikrocontrollers (µC) 23, oder alternativ eines Mikroprozessors. Der µC 23 hat einen A/D-Wandler 60, eine Kennlinienfunktion 68, eine Funktion "RGL" (Reglerfunktion) 70, eine Funktion "CTRL" (Motorstromüberwachung) 71, eine Funktion "CTRL EEPROM" 72, eine Funktion "COMM" (Kommunikationsfunktion) 78, die Funktion "FEHLER" (Fehlerfunktion) 85, die Funktion "ALARM" (Alarmfunktion) 86, die Funktion "BDF" (Betriebsdatenfunktion) 89 und die Funktion "AF" (Antriebsfunktion) 150.

Ein Widerstand 52 ist zwischen einem Punkt 56 und Masse (GND) geschaltet und ein Widerstand 54 zwischen einer Betriebsspannung $U_B$ und dem Punkt 56. Der Punkt 56 ist mit dem Eingang 57 des A/D-Wandlers 60 verbunden. Diese Anordnung dient zum Digitalisieren eines der Betriebsspannung $U_B$ entsprechenden Wertes.

Ein NTC-Widerstand 62 (im Temperatursensor 152) ist zwischen einem Punkt 66 und Masse (GND) geschaltet und ein Widerstand 64 zwischen einer geregelten Spannung Vcc (z.B. + 5 V) und dem Punkt 66. Der Punkt 66 ist mit dem Eingang 67 des A/D-Wandler 60 verbunden. Diese Anordnung dient zum Digitalisieren einer mit dem NTC-Widerstand 62 erfaßten Temperatur.

Das EEPROM 74 ist über einen Bus 76 mit der Funktion "CTRL EEPROM" 72 verbunden. Anstatt des EEPROMs 74 könnte z.B. ein Flash-ROM, eine nachprogrammierbare Flex-ROM-Zelle oder ein anderer nichtflüchtiger Speicher verwendet werden. Das EEPROM 74 kann ggf. in dem µC 23 integriert sein.

Der Busanschluß 80 ist über den Bus 82 mit der Kommunikationsfunktion COMM 78 verbunden. Diese ist ihrerseits über eine Verbindung 84 mit der Funktion "CTRL-EEPROM" 72 verbunden, sowie mit anderen Funktionselementen des µC 23.

Die Funktion "ALARM" 86 kann ein Signal am Ausgang ALARM_OUT 88 ausgeben.

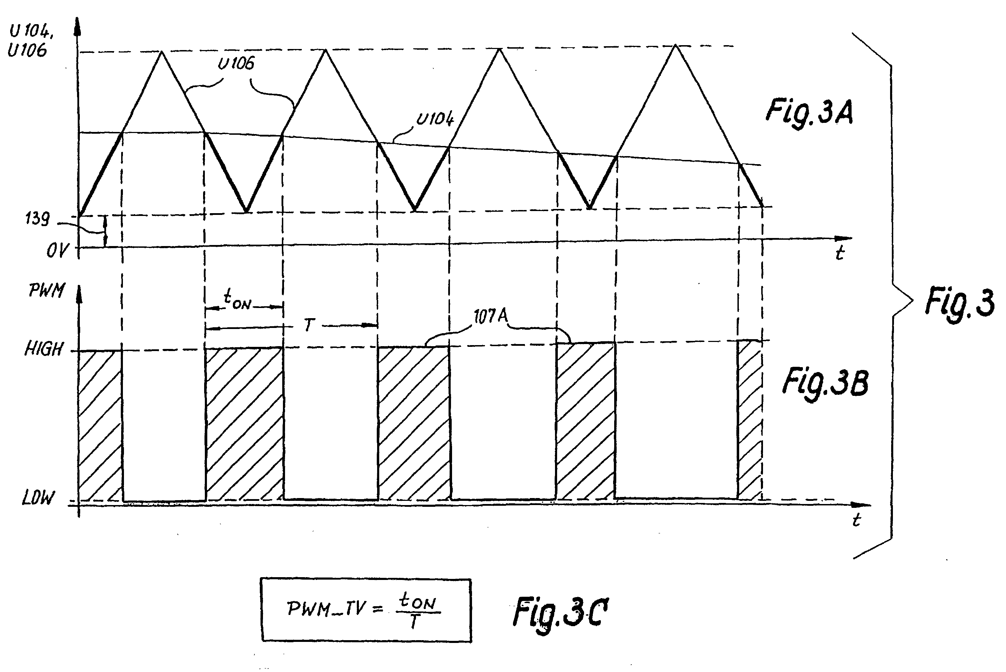

Die Funktion "RGL" 70 ist bei dieser Ausführungsform beispielhaft mit einem Pulsweitenmodulationsgenerator (PWM-Generator) 100 verbunden. Der PWM-Generator weist eine Regelspannungserzeugung 104, einen Dreiecksgenerator 106 und einen Komparator 102 auf, und seine Arbeitsweise wird bei Fig. 3 näher beschrieben. Über den Ausgang 107 des PWM-Generators 100 gelangt ein Signal PWM zu zwei logischen UND-Gliedern 108, 110. Die Breite der Impulse 107A des Signals PWM ist variabel.

Als einfaches Beispiel ist in Fig. 2 ein elektronisch kommutierter Motor 32 mit einer einzigen Phase (Strang) 128 dargestellt. Das Prinzip eines solchen einfachen Motors ist z.B. in der DE 2 346 380 C erläutert. Der Motor 32 weist einen permanentmagnetischen Rotor 130, einen Hallsensor 132 und eine Endstufe 112 auf.

Die Endstufe 112 hat vier als H-Brücke geschaltete npn-Transistoren 114, 116, 118, 120, und einen niederohmigen Widerstand 124 für die Strommessung.

Eine Strombegrenzung "I < $I_{max}$" 125 erhält eine Spannung entsprechend dem am Widerstand 124 gemessenen Wert des Motorstroms I und beeinflußt bei zu hohem Motorstrom I die Regelspannungserzeugung 104, um diesen Strom zu reduzieren. Weiterhin ist die Strombegrenzung 125 mit der Funktion "CTRL" (Motorstromüberwachung) 71 im μC 23 verbunden.

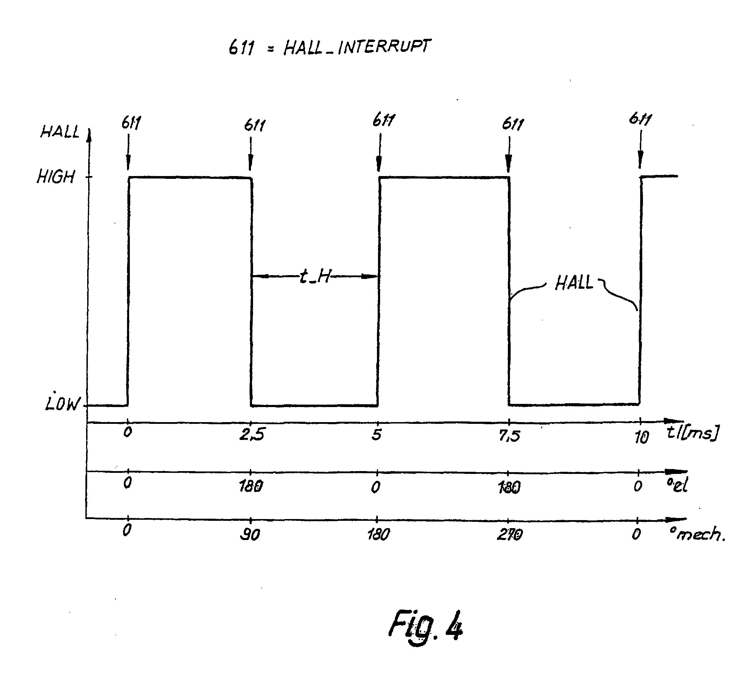

Das Signal des Hallsensors 132 wird einer Auswerteschaltung 134 zugeführt, welche ein Tiefpaßfilter enthält, z.B. in Form eines Komparators, und welche das in Fig. 4 dargestellte Signal HALL erzeugt, das der Funktion "AF" 150 zugeführt wird. Letztere steuert zwei Ausgänge OUT1, OUT2, welche die oberen Transistoren 114, 116 bzw. - über die UND-Glieder 108, 110 - die unteren Transistoren 118, 120 steuern.

Der μC 23 hat femer ein ROM 96, ein RAM 97, und einen Timer 98, der auch als TIMERØ bezeichnet wird. Das ROM 96 wird gewöhnlich zusammen mit der Herstellung des μC 23 programmiert. Es kann auch außerhalb des μC 23 angeordnet sein, ebenso das RAM 97 und der Timer 98, wie das dem Fachmann bekannt ist.

## Arbeitsweise

Die Bestromung der Phase 128 geschieht durch die Transistorendstufe 112. Die Ausgänge OUT1, OUT2 steuern die als H-Brücke 112 geschalteten Transistoren 114, 116, 118, 120. Ist OUT1 auf HIGH und OUT2 auf LOW, so sind die Transistoren 114 und 118 leitend, und ein Strom fließt von der Betriebsspannung $+U_B$ über den Transistor 114, die Statorwicklung 128, den Transistor 118 und den Widerstand 124 nach Masse GND. Es wird bei dieser Betrachtung davon ausgegangen, daß das Signal PWM (Leitung 107) ständig auf HIGH ist, da ansonsten die UND-Glieder 108, 110 und damit die Transistoren 118, 120 sperren.

Ist OUT1 auf LOW und OUT2 auf HIGH, so fließt ein Strom von $U_B$ über den Transistor 116, in umgekehrter Richtung durch die Statorwicklung 128, über den Transistor 120 und den Widerstand 124 nach Masse GND.

Der von der Statorwicklung 128 erzeugte alternierende magnetische Fluß bewirkt ein Drehmoment auf den permanentmagnetischen Rotor 130 und treibt diesen an. Der Rotor 130 ist in diesem Ausführungsbeispiel vierpolig dargestellt.

Die Stellung des Rotors 130 wird über den Hallsensor 132 erfaßt. Sein Signal wird in der Schaltung 134 durch einen Tiefpaß gefiltert und zu einem rechteckförmigen digitalen Signal HALL (Fig. 4) verarbeitet, welches der Funktion "AF" 150 zugeführt wird.

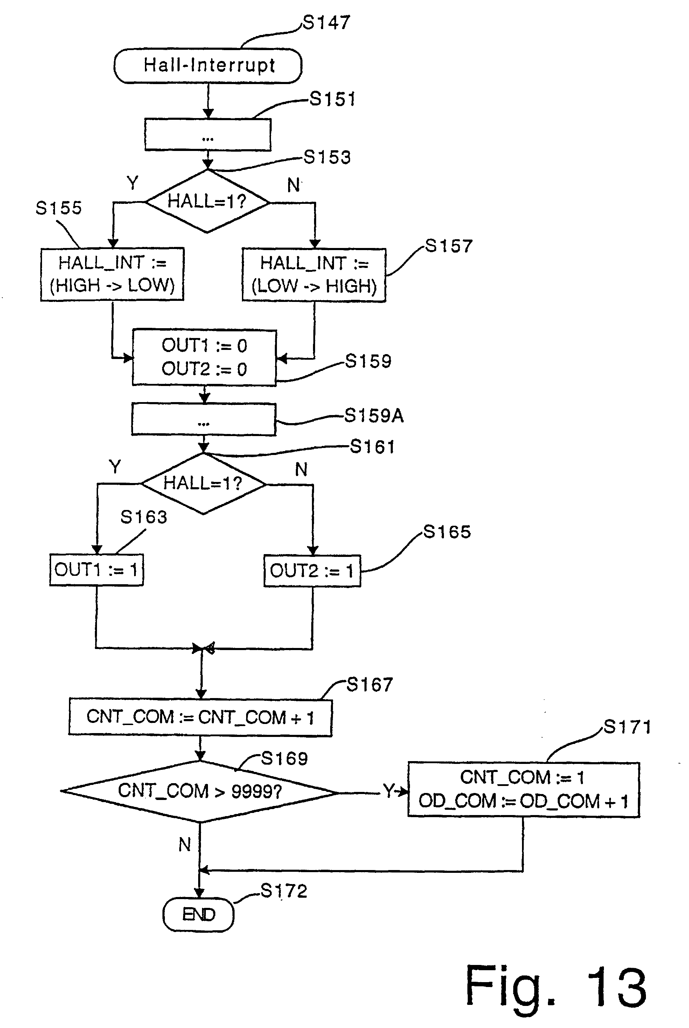

Die Funktion "AF" 150 steuert, ausgehend von dem Signal HALL, die Ausgänge OUT1, OUT2. Die Kommutierung des Motors 32 erfolgt bei diesem Beispiel elektronisch und wird nachfolgend bei Fig. 13 erläutert. Die Funktion "AF" 150 sorgt über die richtige Kommutierung hinaus für einen sicheren Betrieb des Motors 32, z.B. bei einer Überlastung der Transistorendstufe 112. Eine Ausführung der Kommutierung ist auch in der Weise möglich, daß mit steigender Drehzahl die Transistoren 114 bis 120 früher kommutiert werden, etwa analog der Frühzündung bei einem Benzinmotor.

Selbstverständlich eignet sich die Erfindung in gleicher Weise für jede Art von Motor, z.B. für dreiphasige ECMs und andere. Es handelt sich also nur um ein einfaches Ausführungsbeispiel, um das Verständnis der Erfindung zu erleichtem.

Eine Drehzahlregelung wird bei diesem Ausführungsbeispiel durch eine Regelung des Tastverhältnisses PWM_TV des Signals PWM am Ausgang 107 des Reglers 100 erreicht, d.h. dadurch, daß die Impulse 107A länger oder kürzer gemacht werden. Zur Definition des Tastverhältnisses PWM_TV siehe Fig. 3C. Je größer dieses Tastverhältnis ist, desto länger werden die Impulse 107A, und desto länger wird der Ausgang des momentan durch OUT1 oder OUT2 angesteuerten UND-Glieds 108 oder 110 auf HIGH geschaltet. Die Statorwicklung 128 wird folglich länger bestromt, und der Motor 32 stärker angetrieben. Ist z.B. OUT1 auf HIGH und OUT2 auf LOW, so ist der obere Transistor 114 leitend geschaltet, und der untere Transistor 118 wird entsprechend dem Signal PWM über das UND-Glied 108 ein- und ausgeschaltet.

Die Funktion "RGL" 70 regelt in diesem Ausführungsbeispiel über den PWM-Generator 100 die Drehzahl n des Motors 32. Der Funktion "RGL" 70 stehen hierzu die Drehzahl n des Rotors 130, welche über das Signal HALL berechnet wird (siehe Beschreibung zu Fig. 4), und die Solldrehzahl n_s, welche in diesem Ausführungsbeispiel durch die Kennlinienfunktion 68 bestimmt wird, zur Verfügung. Die Drehzahlen n und n_s können hierbei z.B. in Form von Hallzeiten t_H (Fig. 4), z.B. in der Einheit [μs] oder [s], oder als Drehzahl, z. B. in der Einheit [U/min], vorliegen.

Die Kennlinienfunktion 68 ordnet bei diesem Beispiel jeder Temperatur T (erfaßt vom Sensor 152 der Fig. 1) eine Solldrehzahl n_s(T) zu. Die Temperatur T wird mittels des NTC-Widerstands 62 erfaßt, welcher zusammen mit dem Widerstand 64 einen Spannungsteiler zwischen Vcc und Masse bildet, vgl. Fig. 2. Das Potential am Punkt 66, welches ein Maß für die Temperatur des Widerstands 62 darstellt, wird durch den A/D-Wandler 60, welcher sich im μC 23 befindet, digitalisiert und der Kennlinienfunktion 68 zugeführt.

Die Kennlinienfunktion 68 bestimmt aus der Temperatur T die Solldrehzahl n_s des Motors 32. Hierzu wird z.B. über eine Funktion "CTRL EEPROM" 72 der zu der Temperatur T zugehörige Wert n_s (T) aus einer Temperatur-Solldrehzahl-Tabelle im EEPROM 74 geladen.

Die Funktion "COMM" verwaltet den Busanschluß 80, über den Daten von außerhalb in den μC 23 übermittelt werden können, und über den umgekehrt Daten aus dem μC 23 nach außen übermittelt werden können. Es können z.B. Daten, welche über den Busanschluß 80 mit Hilfe der Funktion "COMM" 78 in den µC 23 gelangen, über die Verbindung 84 und mit Hilfe der Funktion "CTRL EEPROM" 72 in das EEPROM 74 geschrieben werden.

**PWM-Generator (Fig. 3)**

**Fig. 3A** zeigt ein Dreieckssignal u106 des Dreiecksgenerators 106 und einen Stellwert u104, welcher von der Regelspannungserzeugung 104 erzeugt wird.
**Fig. 3B** zeigt die aus Fig. 3A resultierenden Impulse 107A, und **Fig. 3C** die Berechnung des Tastverhältnisses PWM_TV der Impulse 107A.
Das Dreieckssignal u106 aus dem Dreiecksgenerator 106 ist idealisiert dargestellt. In Wirklichkeit hat es keine perfekte Dreiecksform, was jedoch an der Funktionsweise des PWM-Generators 100 aus Fig. 2 nichts ändert. Das Dreieckssignal u106 hat einen Offset 139 von der Spannung 0 V. Der Stellwert u104 bewirkt also erst ein Tastverhältnis PWM_TV > 0, wenn er größer ist als der Offset 139.
Das Tastverhältnis PWM_TV des Signals PWM ist das Verhältnis der Dauer $t_{ON}$, die das Signals PWM während einer Periode des Dreieckssignals u106 auf HIGH ist, zu einer ganzen Periode T des Dreieckssignals u106, vgl. Fig. 3B. Es gilt

$$PWM\_TV = t_{ON}/T \qquad (1)$$

Das Tastverhältnis PWM_TV kann zwischen 0 und 100 % liegen. Ist die Motordrehzahl z.B. zu hoch, so wird der Stellwert u104 emiedrigt und damit das Tastverhältnis PWM_TV verkleinert, wie in Fig. 3A dargestellt. Das Ganze wird als Pulsweitenmodulation (PWM) bezeichnet.
Selbstverständlich kann ein erfindungsgemäßer Motor 32 auch ohne Pulsweitenmodulation betrieben werden, z.B. ohne Regelung, oder mit einer anderen Art von Regelung. Diese dient nur als Beispiel, um das Verständnis zu erleichtern.

**Das Signal HALL (Fig. 4)**

**Fig. 4** zeigt das Signal HALL, welches der von dem Hallsensor 132 (Fig. 1) erfaßten Stellung des Rotors 130 entspricht und dem µC 23 über die Schaltung 134 (Fig. 2) zugeführt wird.
Der Rotor 130 kann als Beispiel eine Drehzahl von n = 6000 U/min haben, entsprechend 100 U/sec. Eine mechanische Umdrehung des Rotors 130 dauert dann 10 ms. Der Rotor 130 ist in diesem Ausführungsbeispiel vierpolig dargestellt, so daß in einer mechanischen Umdrehung (360° mech.) vier Hallwechsel stattfinden, zwei von HIGH nach LOW und zwei von LOW nach HIGH. Eine elektrische Umdrehung (360° el.) ist dagegen schon nach zwei Haltwechseln durchgeführt.

Bei einem vierpoligen Motor finden also bei einer mechanischen Umdrehung zwei elektrische Umdrehungen statt.
Die Drehzahl n wird aus der Hallzeit t_H (Fig. 4) zwischen zwei Hallwechseln berechnet. Es gilt

$$t\_H = T/P \qquad (2)$$

Es gilt ferner

$$T = (60 \text{ Sekunden})/n \qquad (3)$$

Aus (2) und (3) folgt

$$t\_H = ((60 \text{ Sekunden})/n)/P \qquad (4)$$

Hierbei ist

T = zeitliche Dauer einer mechanischen Umdrehung des Rotors 130, in Sekunden
P = Polzahl des Rotors (hier P = 4)
n = Drehzahl in U/min.

Bei n = 6000 U/min und P = 4 erhält man aus (4)

$$t\_H = 60 \text{ s} / 6000 / 4 = 2,5 \text{ ms}.$$

Bei einer Drehzahl von 6000 U/min beträgt also der zeitliche Abstand t_H zwischen zwei Wechseln des Signals HALL 2,5 ms, wie in Fig. 4 beispielhaft dargestellt.

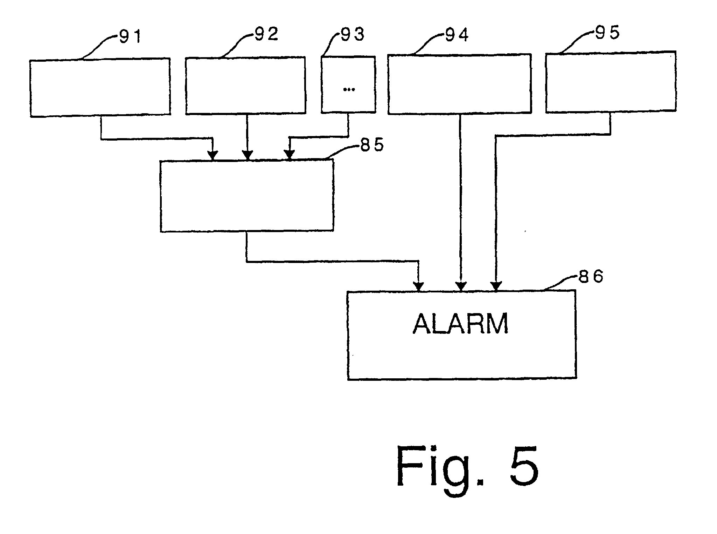

**Übersicht über Fehler- und Alarmfunktion (Fig. 5)**

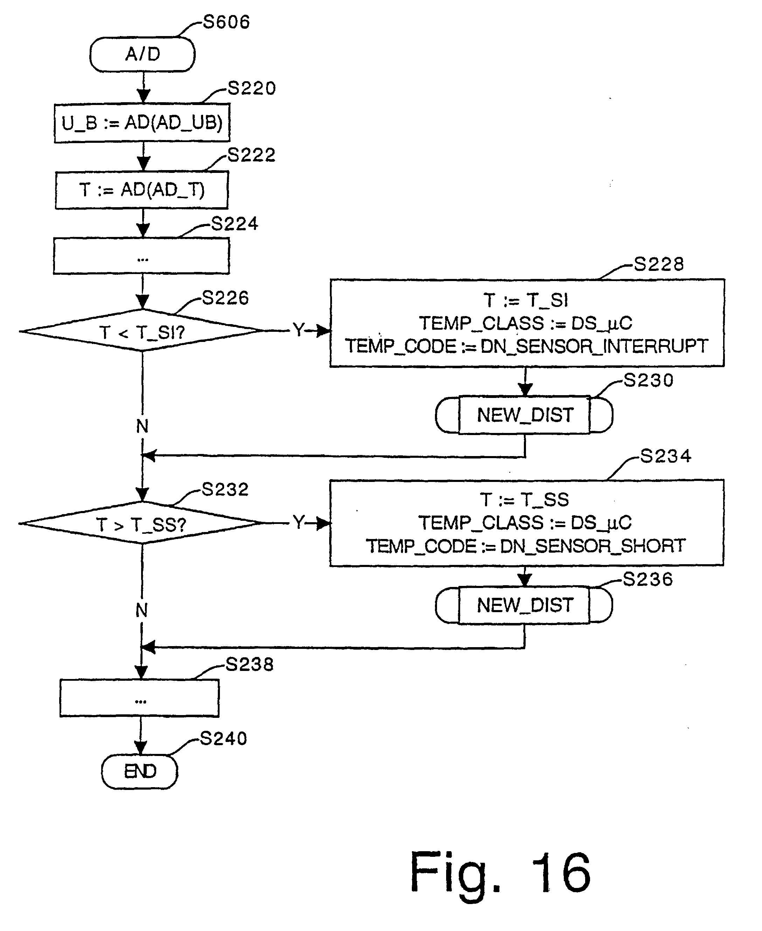

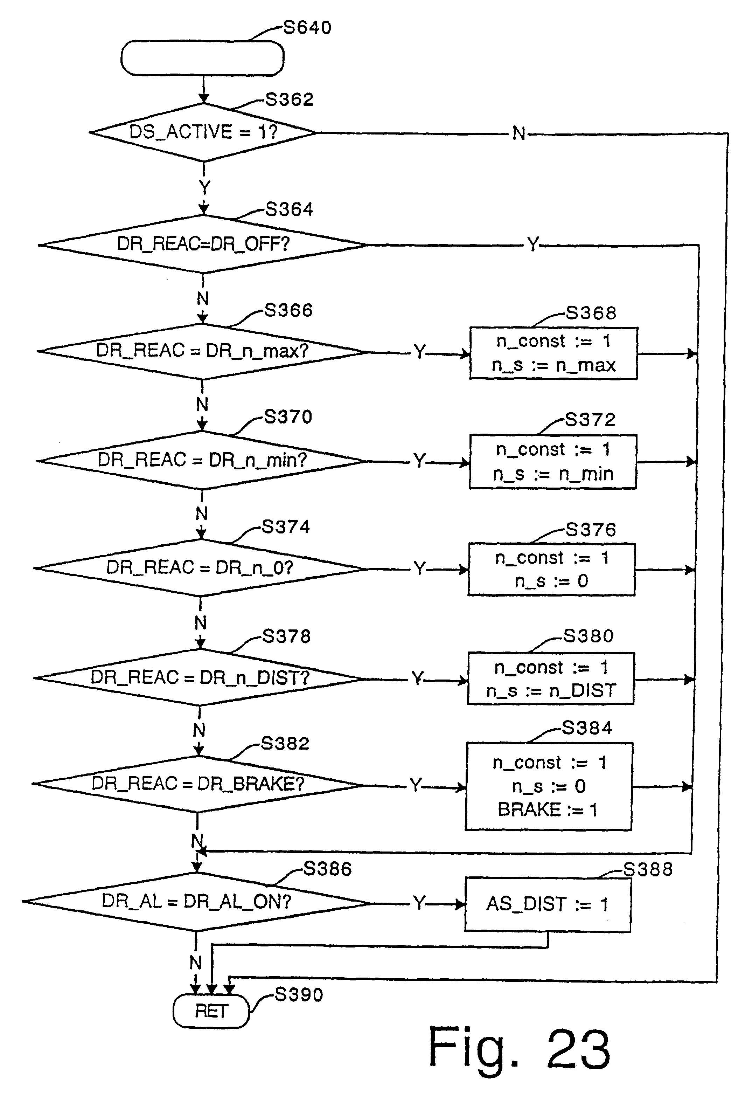

**Fig. 5** zeigt eine Übersicht über das Zusammenarbeiten der Fehlerfunktion 85 und der Funktion "ALARM" 86 aus programmtechnischer Sicht für einen Motor 32 gemäß Fig. 1.
In der obersten Reihe sind die Funktionen "Sensorabrißkontrolle" 91, "Busfehlerkontrolle" 92, "Temperaturkontrolle" 94 und "Drehzahlkontrolle" 95 dargestellt. 93 steht für beliebige weitere Kontrollen, welche nicht dargestellt sind.
Die Kontrollen befinden sich, programmtechnisch gesehen, an dem Ort, an dem die jeweilige Messung stattfindet. So wird z.B. bei der Abfrage des A/D-Wandlers 60 anhand des Werts in der "Sensorabrißkontrolle" 91 geprüft, ob ein "Sensorabriß" des NTC-Widerstands 62 (Fig. 1) vorliegt, vgl. nachfolgend Fig. 16, S226. Dies bedeutet, daß in Fig. 2 die Verbindung zum NTC-Widerstand 62 an der Stelle 62a und/oder 62b unterbrochen ist, d.h. die Leitung ist abgerissen. In diesem Fall meldet die "Sensorabrißkontrolle" 91 einen Fehler, d.h. sie erzeugt ein Fehlersignal. Dieses wird anschließend von der "Fehlerfunktion" 85 (Fig. 23) bemerkt, und diese entscheidet dann, was weiter geschehen soll. So kann sie z.B. die Solldrehzahl n_s auf einen maximalen Wert setzen und einen Alarm bei der Alarmfunktion 86 anfordern. Dies wird nachfolgend bei Fig. 23 ausführlich beschrieben und geschieht abhängig von Parametern, die im EEPROM 74 gespeichert sind und die verändert werden können.

Die "Temperaturkontrolle" 94 und die "Drehzahlkontrolle" 95 nehmen eine Sonderstellung ein. Temperatur und Drehzahl sind für die Funktionalität eines Lüfters so wichtig, daß die Überschreitung einer vorgegebenen Temperatur bzw. eine zu große Abweichung der Drehzahl direkt an die "Alarmfunktion" 86 weitergegeben werden.

Andere Fehler, wie z.B. ein Sensorabriß des NTC-Widerstands 62, schließen dagegen ein zufriedenstellendes Arbeiten des Lüfters nicht aus und können deshalb über die Fehlerfunktion 85 (Fig. 23) verarbeitet werden. Die Fehlerfunktion 85 kann nach den Wünschen des Kunden parametriert werden, wie nachfolgend beschrieben wird.

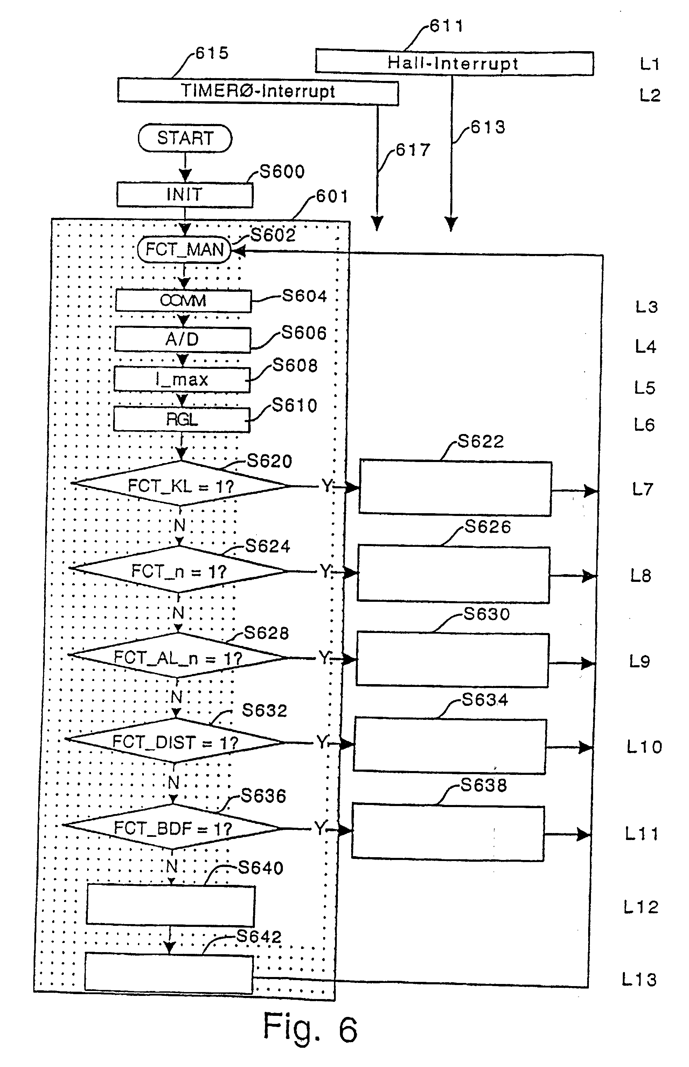

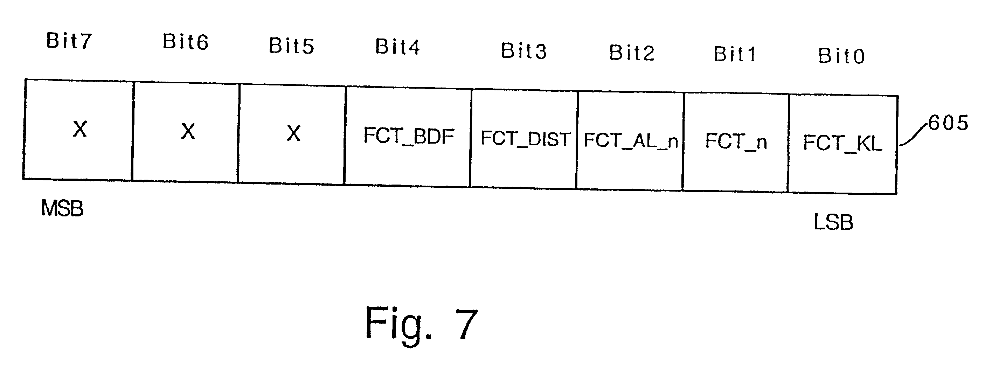

### Funktionsmanager (Fig. 6 und 7)

**Fig. 6** zeigt ein Flußdiagramm mit einer möglichen Ausführungsform des in dem μC 23 ablaufenden Hauptprogramms in Form eines sogenannten Funktionsmanagers 601.

Das Hauptprogramm hat die Aufgaben, auf Ereignisse zu reagieren, z.B. auf eine Änderung des Signals HALL, ferner jeder Funktion bei Bedarf Ressourcen, insbesondere Rechenzeit, zur Verfügung zu stellen, und bei der Vergabe der Ressourcen Prioritäten zu beachten.

Nach dem Einschalten des Motors 32 wird in dem μC 23 ein interner Reset ausgelöst, und in S600 erfolgt dabei die Initialisierung des μC 23. Dabei werden Daten aus dem EEPROM 74 in das RAM 97 des μC 23 geladen, damit sie für den Programmablauf schnell verfügbar sind. Auch erfolgt ein Speichertest, wie nachfolgend beschrieben.

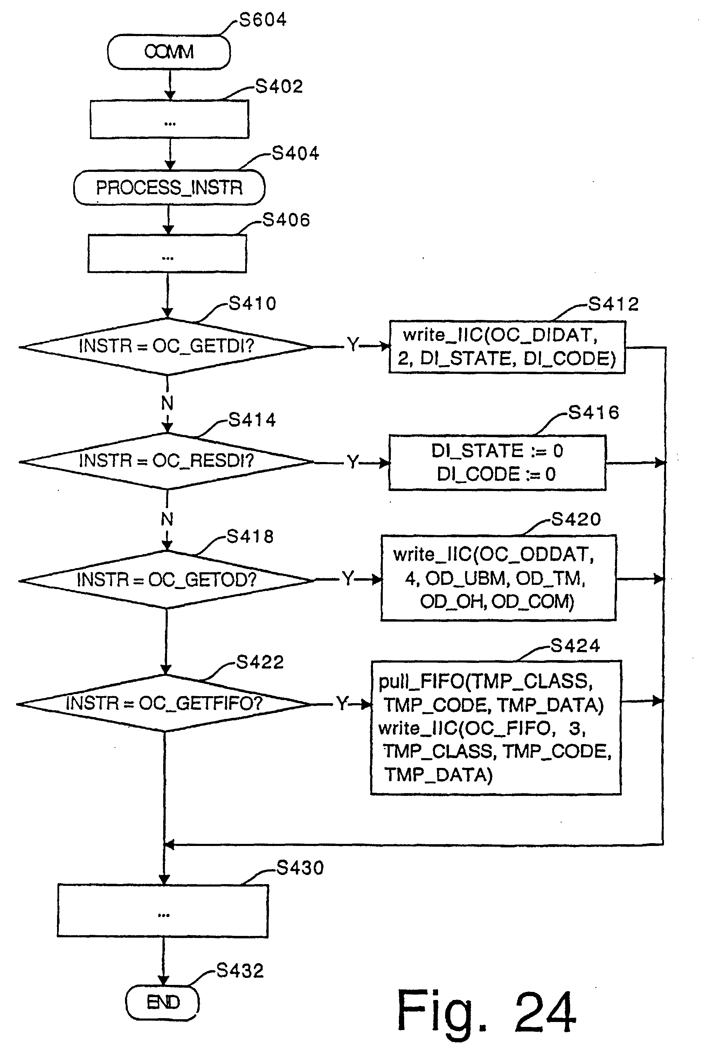

Nach der Initialisierung erfolgt ein Sprung in den Funktionsmanager 601, welcher in S602 beginnt. Als erstes werden die Funktionen abgearbeitet, die zeitkritisch sind und bei jedem Durchlauf abgearbeitet werden müssen. Hierzu zählen die Funktionen "COMM" in S604 (vgl. Fig. 24), "A/D" in S606 (vgl. Fig. 16), "I_max" in S608 und "RGL" in S610.

In der Funktion "COMM" (S604) wird die Kommunikation über den Bus 82 (Fig. 1) überwacht. Bei einer Baudrate von z.B. 2 k muß der Bus 82 alle 250 μs überprüft werden.

In S606 wird der A/D-Wandler 60 (Fig. 2) abgefragt. Dieser digitalisiert die Potentiale an den Eingängen 57, 67. Es können weitere A/D-Wandler für die Digitalisierung weiterer Potentiale vorhanden sein.

In S608 wird eine ggf. vorhandene Motorstrombegrenzungsroutine "I_max" ausgeführt.

Die Funktion "RGL" zur Regelung der Drehzahl n wird in S610 aufgerufen.

**Fig. 7** zeigt ein beispielhaftes Funktionsregister 605, in dem für jede der Funktionen in S622, S626, S630, S634 und S638 (Fig. 6) ein Bit reserviert ist.

In diesem Beispiel ist das Funktionsregister 605 ein Byte groß, und es sind, von dem niederwertigsten Bit (LSB) beginnend, die folgenden Anforderungsbits für die unten erklärten anforderbaren Funktionen definiert

- FCT_KL      für die Kennlinienfunktion,
- FCT_n       für die Drehzahlberechnungsfunktion,
- FCT_AL_n      für die Alarm-Drehzahl-Kontrolle,
- FCT_DIST      für die Fehlererkennung
- FCT_BDF      für die Betriebsdatenfunktion.

Die restlichen Bits sind für zusätzliche anforderbare Funktionen reserviert, die bei Bedarf in den Funktionsmanager eingefügt werden können.

Soll in Fig. 6 und 7 eine bestimmte anforderbare Funktion durch eine andere Funktion oder durch eine Interruptroutine angefordert werden, so wird das Bit der anzufordernden Funktion im Funktionsregister 605 auf 1 gesetzt, z.B. FCT_AL_n := 1. Wenn dann der Funktionsmanager 601 (Fig. 6) bei einem auf diese Anforderung folgenden Durchlauf keine andere anforderbare Funktion mit höherer Priorität findet, so wird die genannte Funktion in S630 aufgerufen, also die Alarm-Drehzahl-Kontrolle.

Ist eine angeforderte Funktion abgearbeitet, so setzt sie ihr Bit in dem Funktionsregister 605 (Fig. 7) wieder auf 0, z.B. FCT_AL_n := 0 am Ende von S630.

Nachdem die anforderbare Funktion ausgeführt wurde, wird wieder nach S602 an den Anfang "FCT_MAN" des Funktionsmanagers 601 gesprungen.

In Fig. 6 wird nach S610 in einer vorbestimmten Reihenfolge, von der wichtigsten anforderbaren Funktion ausgehend, geprüft, ob deren Anforderungsbit gesetzt ist. Ist dies der Fall, so wird die angeforderte Funktion ausgeführt. Je höher eine solche Funktion in dem Funktionsmanager 601 steht, desto höher ist ihre Priorität.

In S620 wird überprüft, ob das Anforderungsbit **FCT_KL** gesetzt ist. Ist es gesetzt, so wird die Kennlinienfunktion in S622 aufgerufen.

Ist in S624 **FCT_n** gesetzt, so wird die Drehzahlberechnungsfunktion in S626 aufgerufen.

Ist in S628 **FCT_AL_n** gesetzt, so wird die Alarm-Drehzahl-Kontrolle in S630 aufgerufen.

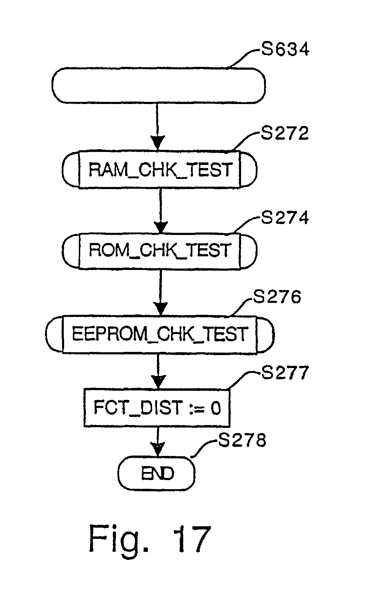

Ist in S632 **FCT_DIST** gesetzt, so wird die Fehlererkennung in S634 aufgerufen, die bei Fig. 17 beschrieben wird.

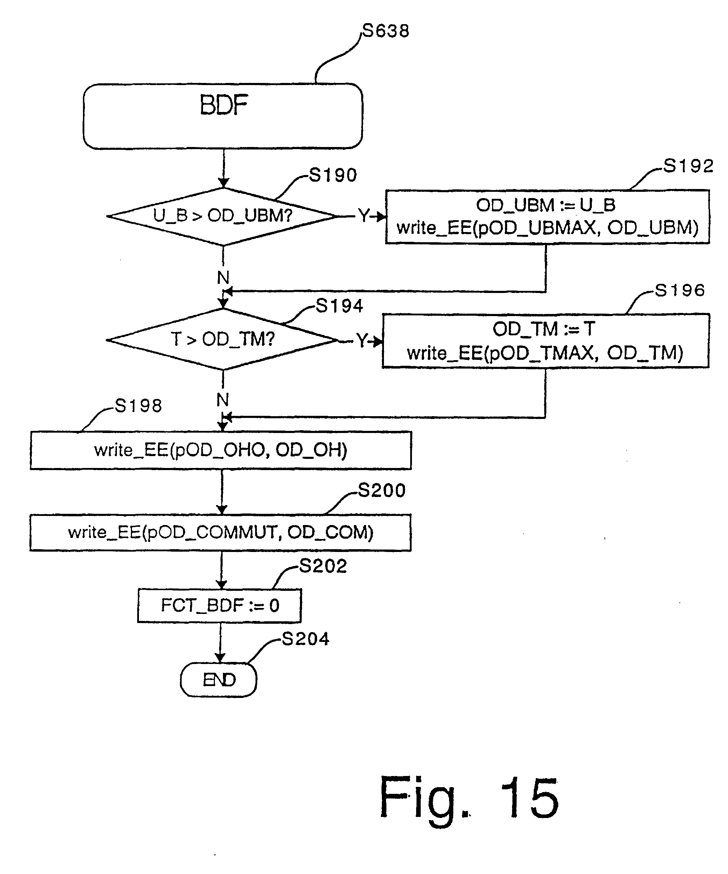

Ist in S636 **FCT_BDF** gesetzt, so wird die Betriebsdatenfunktion in S638 aufgerufen, die bei Fig. 15 beschrieben wird.

War keines der Anforderungsbits des Funktionsregisters 605 gesetzt, so wird eine Fehlerfunktion in S640 und eine Alarmfunktion in S642 ausgeführt und nach S602 zurückgesprungen. Zur Fehlerfunktion S640 vgl. Fig. 23. Man kann sie auch als Fehlerüberwachungsroutine bezeichnen, weil sie überwacht, ob eine der anderen Routinen einen Fehler gemeldet hat, und dann eine Reaktion auf diesen Fehler bewirkt.

Fig. 6 zeigt auch symbolisch einen Hall-Interrupt 611 (Fig. 13), der die höchste Priorität L1 (Level 1) hat. Er unterbricht alle Prozesse des Funktionsmanagers 601, wie durch den Pfeil 613 symbolisiert, um eine präzise Kommutierung des Motors 32 zu erhalten. Ein Hall-Interrupt 611 wird jedes Mal erzeugt, wenn sich in Fig. 4 das Signal HALL ändert, und er bewirkt eine Erhöhung des Kommutierungszählers CNT_COM, wie bei Fig. 13 beschrieben. Außerdem wird die Kommutierung des Motors 32, also die Erzeugung der Signale OUT1 und OUT2, direkt oder indirekt von den Hall-Interrupts 611 gesteuert, um einen ruhigen Lauf des Motors zu erhalten, vgl. ebenfalls Fig. 13.

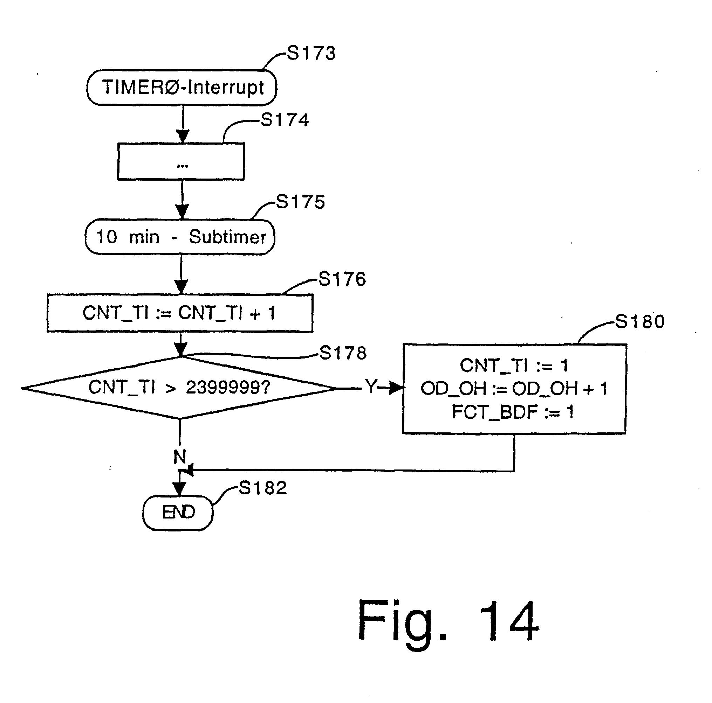

Unter dem Hall-Interrupt 611 ist bei 615 ein TIMERØ-Interrupt des Timers TIMERØ 98 (Fig. 2) dargestellt. Dieser hat eine niedrigere Priorität L2 und unterbricht alle Prozesse unter ihm, wie durch den Pfeil 617 angedeutet. Er wird bei Fig. 14 beschrieben.

Wenn der Hall-Interrupt 611 und der TIMERØ-Interrupt 615 gleichzeitig angefordert würden, würden sie nach der Reihenfolge ihrer Priorität abgearbeitet.

Die nachfolgenden Funktionen haben eine immer niedrigere Priorität, von L3 für die Funktion "COMM" in S604 bis L13 für die Alarmfunktion in S642.

Auf diese Weise gelingt es, die verschiedenen "Bedürfnisse" des Motors 32 in eine vorgegebene Hierarchie einzuordnen und die Ressourcen des μC 23 optimal für den Betrieb des Motors 32 zu nutzen. Die Fehlerfunktion S640 und die Alarmfunktion S642 werden also nur ausgeführt, wenn der μC 23 gerade freie Rechenzeit hat.

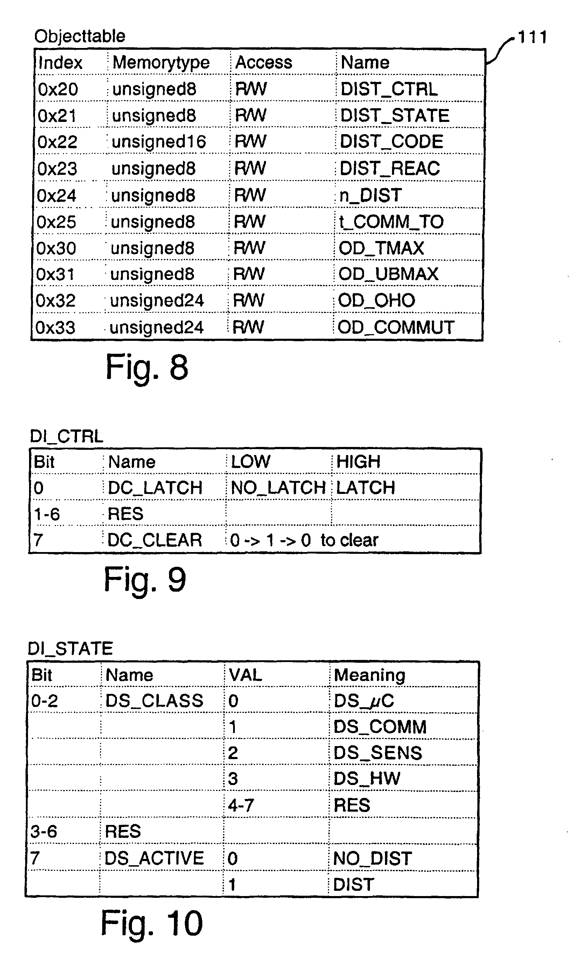

### Objekttabelle (Fig. 8)

**Fig. 8** zeigt eine Tabelle 111 mit Objekten, welche Konfigurationsparameter für den Motor 32 enthalten. Die einzelnen Objekte weisen einen Index, einen Speichertyp (Memorytype), Zugriffsrechte (Access) und einen Namen auf.

Die Objekttabelle 111 wird in einem nichtflüchtigen Speicher, in diesem Ausführungsbeispiel im EEPROM 74 (Fig. 1), gespeichert. Nach jedem Reset des μC 23 wird bei der Initialisierung in S600 (Fig. 6) die Objekttabelle 111 aus dem EEPROM 74 durch die Funktion "CTRL EEPROM" 72 in das RAM 97 des μC 23 übertragen und steht daraufhin dem in dem μC 23 ablaufenden Programm (Fig. 6) zur Verfügung.

Der Index ist in der Tabelle 111 hexadezimal angegeben, wobei ein 0x vor einer Zahl für hexadezimal steht. Der Speichertyp ist entweder unsigned8, also ein Byte ohne Vorzeichenbit, unsigned16 also zwei Byte ohne Vorzeichenbit, oder unsigned 24, also drei Byte ohne Vorzeichenbit. Die Zugriffsrechte sind R (Read)/W (Write) (R=Lesen und W=Schreiben). Die Objekte können ausgelesen und verändert werden. Der Name des Objekts dient zum leichteren Gebrauch. Es bedeuten

| | |
|---|---|
| DIST_CTRL | Steuerwort für die Fehlerfunktion |
| DIST_STATE | Statuswort für die Fehlerfunktion |
| DIST_CODE | Fehlercode für die Fehlerfunktion |
| DIST_REAC | Reaktionswort für die Fehlerfunktion |
| n_DIST | Fehlerdrehzahl |
| t_COMM_TO | Maximale Time-Out-Zeit für die Kommunikationsfunktion |
| OD_TMAX | Temperatur für die Betriebsdatenfunktion |
| OD_UBMAX | Betriebsspannung für die Betriebsdatenfunktion |
| OD_OHO | Betriebsstunden (operating hours, z. B. in der Einheit 10 min) für die Betriebsdatenfunktion |
| OD_COMMUT | Gesamtzahl der Kommutierungen (z. B. in der Einheit 10000) für die Betriebsdatenfunktion. |

Durch die offene Struktur der Objekttabelle 111 ist es möglich, in einfacher Weise neue Objekte über ein standardisiertes Verfahren hinzuzufügen und die Tabelle beliebig zu erweitern. Eine Änderung der Objekttabelle 111 und damit der Konfiguration erfolgt bevorzugt über den Bus 82, die Funktion "COMM" 78 (Fig. 2) und die Funktion "CTRL EEPROM" 72. Die Konfiguration kann vor der Auslieferung nach den Wünschen des Kunden geschehen, oder der Kunde erhält die Möglichkeit, selbst Änderungen vorzunehmen.

### Erläuterung der Objekte In der Objekttabelle 111

**DIST_CTRL** ist das Steuerwort für die Fehlerüberwachungsroutine 85, die in Fig. 6 und 23 mit S640 bezeichnet ist. Sein Aufbau ergibt sich aus Fig. 9 und der zugehörigen Beschreibung. Je nach Inhalt bewirkt dieses Wort, daß ein Fehler entweder im EEPROM 74 gespeichert wird, oder daß er nicht gespeichert wird. - Wenn DIST_CTRL in das RAM 97 geladen ist, wird es als DI_CTRL bezeichnet.

**DIST_STATE** ist ein Statuswort für die Fehlerfunktion. Wenn DIST_STATE in das RAM 97 geladen ist, wird es als DI_STATE bezeichnet. Der Aufbau von DI_STATE ergibt sich aus Fig. 10 und der zugehörigen Beschreibung. Es gibt in seinem Bit 7 an, ob ein Fehler vorliegt, und seine Bits 0 bis 2 definieren grob die Art des aufgetretenen Fehlers, z.B. Fehler bei der Kommutierung, oder Fehler im Sensor 152.

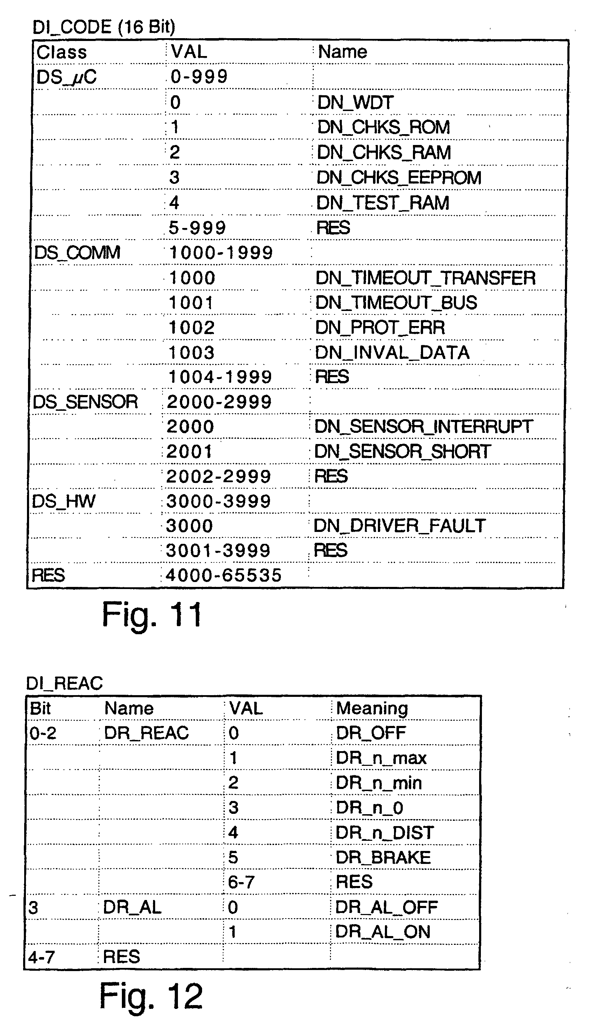

**DIST_CODE** enthält Fehlercodes für die Fehlerfunktion 85, welche den Fehler genauer spezifizieren. Wenn DIST_CODE in das RAM 97 geladen ist, wird es als DI_CODE bezeichnet. Sein Aufbau ergibt sich aus Fig. 11 und der zugehörigen Beschreibung. Z.B. können für die Fehlerklasse DS_COMM des Statusworts DI-STATE vier separate Fehlercodes betreffend die Art des Übertragungsfehlers vorliegen.

**DIST_REAC** ist ein Reaktionswort für die Fehlerfunktion 85 und gibt an, wie der Motor auf einen Fehler reagieren soll, z.B. mit Stehenbleiben, oder Bremsen, oder maximaler Drehzahl. Wenn DIST_REAC in das RAM 97 geladen ist, wird es als DI_REAC bezeichnet. Sein Aufbau ergibt sich aus Fig. 12 und der zugehörigen Beschreibung. Seine Auswertung ergibt sich aus Fig. 23.

**n_DIST** ist die Fehlerdrehzahl. Dies ist eine feste Drehzahl, mit der der Motor 32 bei einem Fehler laufen soll, vgl. Fig. 23, S378 und S380.

**t_COMM_TO** ist die maximale Time-Out-Zeit für die Kommunikationsfunktion. Sie bestimmt die Übertragungsrate auf dem Bus 82.

**OD_TMAX** ist der obere Extremwert der Temperatur T, die vom Sensor 152 gemessen wird. Dieser Wert funktioniert genauso wie ein "Maximumthermometer", aber digital. Alle 10 Minuten wird geprüft, ob die aktuelle Temperatur höher ist als der gespeicherte Wert OD_TMAX, und wenn dies der Fall ist, wird der neue, höhere Wert als OD_TMAX im EEPROM 74 gespeichert. Dies kann zur Analyse von Fehlern wichtig sein.

**OD_UBMAX** ist der obere Extremwert der Betriebsspannung UB des Motors 32. Alle 10 Minuten wird geprüft, ob die aktuelle Betriebsspannung UB höher ist als der gespeicherte Wert OD_UBMAX, und wenn dies der Fall ist, wird der neue, höhere Wert als OD_UBMAX im EEPROM 74 gespeichert. Dies kann zur Analyse von Fehlern wichtig sein.

**OD_OHO** ist die Gesamtzahl der Betriebsstunden des Motors 32, gemessen in Einheiten von 10 Minuten. OD_OHO = 6.000 bedeutet also 1.000 Betriebsstunden.

Beim Einschalten wird OD_OHO in das RAM 97 geladen und dort durch die Routine gemäß Fig. 14 fortlaufend aktualisiert. Immer nach 10 Minuten wird der aktualisierte Wert in das EEPROM 74 geschrieben, zusammen mit anderen Werten, wie bei Fig. 15 erläutert.

**OD_COMMUT** ist die Gesamtzahl der Hall-Interrupts 611 (Fig. 4). Da jeder Hall-Interrupt eine Kommutierung bewirkt, vgl. Fig. 13, ist dies ein Maß für die Gesamtzahl der Umdrehungen des Rotors 130.

Die Zahl der Kommutierungen wird in Einheiten von 10.000 gespeichert, so daß ein Wert 200.000 anzeigt, daß 2 Milliarden Kommutierungen stattgefunden haben. Bei einem vierpoligen Rotor 130 entspricht das 500 Millionen Umdrehungen, und bei konstanten 3000 U/min entspräche dies einer Betriebsdauer von etwa 2.800 Stunden. Diese Zahl gibt Aufschlüsse über die voraussichtliche restliche Lebensdauer der Lager des Motors 32.

Beim Einschalten wird OD_COMMUT in das RAM 97 geladen und dort durch die Routine gemäß Fig. 13 fortlaufend aktualisiert. Immer nach 10 Minuten wird der aktualisierte Wert in das EEPROM 74 geschrieben, zusammen mit anderen Werten, wie bei Fig. 15 erläutert.

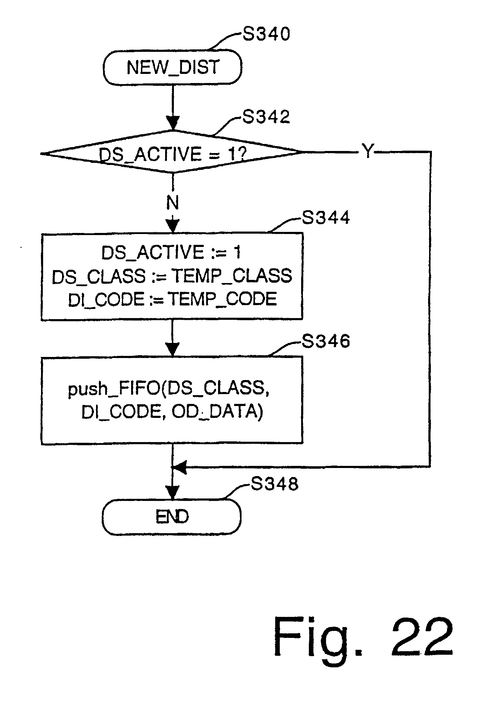

Die aktuellen Werte (im RAM 97) von OD_TMAX, OD_UBMAX, OD_OHO und OD_COMMUT werden beim Auftreten eines Fehlers in einem FIFO des EEPROMS 74 gespeichert, vgl. Fig. 22, S346, push_OD_DATA.

Die Objekttabelle 111 (Fig. 8) enthält also eine Art Lebenslauf des Motors 32, und durch Veränderung der ersten vier Objekte kann festgelegt werden, ob und wie der Motor 32 bei einem Fehler reagiert, ob und was gespeichert werden soll, wohin ein Alarm ausgegeben wird, etc., d.h. es können entsprechende Parameter festgelegt und in den Motor eingegeben werden.

**Steuer- und Statuswörter**

**Fig. 9** zeigt ein Steuerwort **DI_CTRL,** welches den gleichen Aufbau hat wie das Objekt DIST_CTRL aus der Objekttabelle 111 (Fig. 8) und welches zum Datenaustausch zwischen dem Betriebssystem (Fig. 6) und den einzelnen Fehlerfunktionen dient. Es befindet sich im RAM 97. Letzteres wird nach einem Reset des µC 23 in "INIT" S600 beim Start des Hauptprogramms mit dem Wert von DIST_CTRL (Fig. 8) geladen. Die Bits von DI_CTRL sind mit 0 bis 7 durchnumeriert.

Bit 0 hat den Namen DC_LATCH. Ist DC_LATCH = NO_LATCH, also LOW (0), so wird ein Fehler nicht gespeichert, und beim Verschwinden des Fehlers wird der Fehlerzustand zurückgesetzt. Ist dagegen DC_LATCH = LATCH, also HIGH (1), so wird ein Fehlerzustand erst gelöscht, wenn hierzu eine Aufforderung über den Bus 82 kommt.

Die Bits 1 bis 6 werden hier nicht benutzt (RES) und sind für zukünftige Anwendungen und Erweiterungen reserviert.

Das Bit 7 hat den Namen DC_CLEAR und wird für das Löschen eines Fehlerzustands verwendet. Hierzu muß der Wert von DC_CLEAR, der im Grundzustand 0 ist, auf 1 und daraufhin wieder auf 0 gesetzt werden, wie in Fig. 9 angegeben.

**Fig. 10** zeigt ein Statuswort **DI_STATE,** welches dem Objekt DIST_STATE (Fig. 8) entspricht, und wie DI_CTRL in "INIT" S600 initialisiert wird.

Die Bits 0-2 haben den Namen DS_CLASS, und DS_CLASS kann die (dezimalen) Werte 0 bis 7 annehmen. DS_CLASS beinhaltet die Fehlerklasse. Dabei bedeuten die Fehlerklassen

- DS_µC (0)  ein Fehler des µC 23
- DS_COMM (1)  ein Fehler in der Kommunikation
- DS_SENS (2)  ein Fehler des oder der Sensoren, z.B. des NTC-Widerstands 62
- DS_HW (3)  ein Fehler in der übrigen Hardware

Die übrigen Werte 4-7 von DS_CLASS werden in diesem Ausführungsbeispiel nicht benutzt (RES).

Die Bits 3-6 werden nicht benutzt (RES).

Das Bit 7 hat den Namen **DS_ACTIVE.** Ist DS_ACTIVE = NO_DIST (0), so liegt kein Fehler vor, und der Inhalt von DS_CLASS hat keine Bedeutung. Bei DS_ACTIVE.= DIST (1) liegt ein Fehler vor, und in DS_CLASS steht die Fehlerklasse.

**Fig. 11** zeigt einen Fehlercode **DI_CODE,** welcher den Fehler genauer spezifiziert. Nach jedem Reset des µC 23 wird in S600 (Fig. 6) der Wert des Objekts DIST_CODE (Fig. 8) nach DI_CODE geschrieben. DI_CODE ist 16 Bit groß, und es können damit die Werte 0 bis 65535 dargestellt werden. Für die einzelnen Fehlerklassen (Fig. 10) sind jeweils 1000 Werte vorgesehen.

Die Werte (VAL) 0-999 sind für die Klasse DS_µC reserviert, also für Fehler des µC 23. Die Fehlercodes bedeuten

- DN_WDT      Fehler eines Watchdogtimers
- DN_CHKS_ROM      Checksummenfehler im ROM 96
- DN_CHKS_RAM      Checksummenfehler im statischen Teil 142 des RAM 97
- DN_CHKS_EEPROM      Checksummenfehler im EEPROM 74
- DN_TEST_RAM      Fehler beim internen RAM-Test des µC 23

Die Werte 1000-1999 sind für die Klasse DS_COMM reserviert. Die Fehlercodes bedeuten

- DN_TIMEOUT_TRANSFER      Time-Out-Fehler während einer Übertragung
- DN_TIMEOUT_BUS      Time-Out-Fehler beim Zugriff auf den Bus 82
- DN_PROT_ERR      Ungültiges Übertragungsprotokoll (z.B. 9 Datenbits)
- DN_INVAL_DATA      Ungültige Daten

Die Werte 2000-2999 sind für die Klasse DS_SENSOR reserviert. Die Fehlercodes bedeuten

- DN_SENSOR_INTERRUPT      Sensorabriß (Abriß an den Stellen 62a oder 62b der Fig. 2)
- DN_SENSOR_SHORT      Sensorkurzschluß (zwischen den Stellen 62a, 62b)

Die Werte 3000-3999 sind für die Klasse DS_HW reserviert (HW=Hardware).

Die Fehlercodes bedeuten

- DN_DRIVER_FAULT      Fehler in der Endstufe 112 (Fig. 2)

Die übrigen Werte sind hier nicht definiert (RES).

**Fig. 12** zeigt ein Reaktionswort **DI_REAC,** das angibt, welche Reaktion bei einem Fehler erfolgen soll. DI_REAC entspricht dem Objekt DIST_REAC aus Fig. 8, und es wird wie DI_CTRL nach einem Reset des µC 23 in S600 (Fig. 6) mit dem Wert des Objekts DIST_REAC aus der Objekttabelle 111 beschrieben.

Die Bits 0-2 haben den Namen DR_REAC, und DR_REAC kann die (dezimalen) Werte (VAL) 0 bis 7 annehmen. DR_REAC beinhaltet die Reaktion, die bei einem Fehler durch die Fehlerfunktion erfolgen soll. Dabei bedeuten die Reaktionen

- DR_OFF      keine Reaktion
- DR_n_max      maximale Drehzahl
- DR_n_min      minimale Drehzahl
- DR_n_0      Drehzahl 0
- DR_n_DIST      spezielle Fehlerdrehzahl
- DR_BRAKE      Drehzahl 0 und aktive Bremsung des Motors 32

Das Bit 3 hat den Namen DR_AL. Ist DR_AL = DR_AL_OFF, so wird bei einem Fehler kein Alarm bei der Alarmfunktion AF 86 angefordert. Ist dagegen DR_AL = DR_AL_ON, so wird bei einem Fehler ein Alarm bei der Alarmfunktion 86 angefordert. Die Bits 4-7 werden hier nicht benutzt (RES).

**Hall- und TIMERØ-Interrupt**

**Fig. 13** zeigt die hier wesentlichen Teile einer "Hall-Interrupt"-Routine S147, welche beim Auftreten eines Hall-Interrupts aufgerufen wird (611 in Fig. 6). Ein Hall-Interrupt 611 wird bei jedem Wechsel des Signals HALL (Fig. 4) von HIGH auf LOW bzw. LOW auf HIGH ausgelöst, also bei dem Beispiel aus Fig. 4 zu den Zeitpunkten t = 0; 2,5; 5; 7,5 und 10 ms.

Mit S151 sind generell Schritte bezeichnet, die zur Berechnung der HALL-Zeit t_H (Fig. 4) gehören, z. B. Stoppen eines entsprechenden Timers, etc.

In den Schritten S153, S155 und S157 wird im µC 23 die Flanke des Signals HALL, bei der der nächste Hall-Interrupt ausgelöst werden soll, eingestellt. Hierzu wird in S153 geprüft, ob HALL = 1 ist. Falls JA, wird in S155 die Flanke, bei der der nächste Hall-Interrupt ausgelöst werden soll, auf eine fallende Flanke (HIGH → LOW) gesetzt. Falls nicht, wird in S157 die Auslösung auf eine steigende Flanke (LOW → HIGH) gesetzt.

In S159 werden OUT1 und OUT2 auf Null gesetzt, d.h. der Motor 32 wird stromlos gemacht. Dies dient dazu, die H-Brücke 112 kurzzeitig zu unterbrechen, damit in ihr bei einer Kommutierung kein Kurzschluß entstehen kann.

In S159A können verschiedene Schritte ausgeführt werden, z.B. das erneute Starten eines (nicht dargestellten) Zählers für die Messung von t_H. Diese Programmschritte sollten z.B. 50 µs dauern.

In S161 bis S165 wird die Kommutierung durchgeführt. Ist in S161 HALL=1, so wird in S163 OUT1 auf 1 gesetzt, wobei OUT2 weiterhin auf 0 bleibt, vgl. S159. Ist in S161 HALL=0, so wird in S165 OUT2 auf 1 gesetzt, wobei OUT1 weiter auf 0 bleibt, vgl. S159.

Durch das Signal OUT1=1 werden die Transistoren 114 und 118 eingeschaltet, wie bereits beschrieben, und durch das Signal OUT2=1 werden die Transistoren 116 und 120 eingeschaltet.

Die Schritte S167 bis 171 stellen einen Zähler dar, der einen Zähler OD_COM, welcher nach jedem Reset des µC 23 in S600 (Fig. 6) mit dem Wert des Objekts OD-COMMUT aus der Objekttabelle 111 beschrieben wird, z.B. alle 10.000 Kommutierungen um 1 erhöht.

Hierzu wird in S167 bei jedem Hall-Interrupt ein Zähler CNT_COM um 1 erhöht. In S169 wird überprüft, ob CNT_COM > 9999 ist. Falls ja, so wird in S171 CNT_COM auf 1 gesetzt, und der Zähler OD_COM wird um 1 erhöht. Ist in S169 nicht CNT_COM > 9999, so wird direkt zum Ende in S172 gesprungen.

Die Zahl der Kommutierungen wird in Fig. 6 für die Funktionen "Betriebsdatenfunktion" S638 und "Fehlerfunktion" S640 benötigt.

**Fig. 14** zeigt einen Programmteil der "TIMERØ-Interrupt"-Routine S173, das in Fig. 6 mit 615 bezeichnet ist. Der Timer TIMERØ 98 löst zum Beispiel alle 256 µs einen TIMERØ-Interrupt aus. Daher kann der Timer TIMERØ für Zeitmessungen verwendet werden.

Der Schritt S174 steht für denkbare andere Anwendungen des Timers 98, welche hier nicht dargestellt sind.

In den Schritten S175 bis S180 ist ein Subtimer dargestellt, der z.B. alle 10 Minuten einen Schritt S180 ausführt. Hierzu wird ein Zähler CNT_TI verwendet, welcher bei jedem TIMERØ-Interrupt in S176 um 1 erhöht wird. In S178 wird überprüft, ob CNT_TI > 2.399.999 ist. Falls ja, so wird nach S180 gesprungen, ansonsten an das Ende S182.

Hat CNT_TI den Wert 2.400.000 erreicht, so sind 2.400.000 mal 256 µs vergangen. Dies entspricht genau 10 Minuten. In S180 wird dann CNT_TI zurück auf 1 gesetzt. Ein "Betriebsstundenzähler" OD_OH im RAM 97, welcher nach jedem Reset des µC 23 mit dem Wert des Objekts OD_OHO aus dem EEPROM 74 beschrieben wird, wird um 1 erhöht, und das Bit FCT_BDF des Funktionsregisters 605 aus Fig 6 wird gesetzt, so daß vom Funktionsmanager 601 die "Betriebsdatenfunktion" S638 aufgerufen wird, vgl. Fig. 6, um bestimmte Betriebsdatenwerte in das EEPROM 74 zu laden.

Der "Betriebsstundenzähler" OD_OH im RAM 97 enthält also hier die Gesamt-Betriebszeit des Lüfters in der Einheit 10 Minuten, ebenso der Betriebsstundenzähler OD_OHO im EEPROM 74.

### Betriebsdatenfunktion BDF (Fig. 15)

**Fig. 15** zeigt die "Betriebsdatenfunktion" S638 (Fig. 6), welche aufgerufen wird, wenn der Funktionsmanager 601 (Fig. 6) den Schritt S636 erreicht und das Bit FCT_BDF aus dem Funktionsregister 605 (Fig. 7) z. B. durch den Subtimer in der "TIMERØ-Interrupt"-Routine S170 (Fig. 14) gesetzt wurde. Das geschieht beim vorliegenden Ausführungsbeispiel alle 10 Minuten.

Die "Betriebsdatenfunktion" S638 dient dazu, wichtige Betriebsdatenwerte (z.B. maximale Lüftertemperatur oder Betriebsstunden) im EEPROM 74 zu speichern, um z.B. ein Kriterium für das Erneuern des Lüfters zu erhalten.

Diese Daten können dann aus dem EEPROM 74 gelesen werden und liefern eine Art "Gesundheitsinformation" über den Motor 32.

Zusätzlich werden auch noch in einem FIFO des EEPROM 74 "Krankheitsinformationen" über den Motor 32 gespeichert, wenn solche "Krankheiten" auftreten. Auch diese Krankheitsinformationen können später aus dem EEPROM ausgelesen werden und liefern eine Art Protokoll des aufgetretenen Fehlers und ggf. seiner Ursache, z.B. zu hohe Temperatur, Überspannung, oder Ende der Lebensdauer.

Bei der Ausführung der Betriebsdatenfunktion BDF wird in S190 überprüft, ob die momentane Betriebsspannung U_B, welche durch den A/D-Wandler 60 digitalisiert wurde, größer als die bisher höchste Betriebsspannung OD_UBM ist. Falls ja, wird in S192 U_B dem Wert OD_UBM zugeordnet, und das Objekt OD_UBMAX, welches sich in diesem Ausführungsbeispiel an der Stelle pOD_UBMAX im EEPROM 74 befindet, wird mit dem Befehl write_EE auf den neuen Wert OD_UBM gesetzt. Die Stelle, an der sich ein Objekt im EEPROM 74 befindet (vgl. Fig. 8), wird durch ein vorangestelltes "p" bezeichnet. So ist pOD_UBMAX die Stelle im EEPROM 74, an der sich das Objekt OD_UBMAX befindet, vgl. Fig. 8. Die maximale Betriebsspannung UBMAX ist wichtig, da eine zu hohe Betriebsspannung den Verschleiß der elektronischen Bauteile beschleunigt. Ebenso wäre es möglich, eine minimale Betriebsspannung (Unterspannung) festzuhalten.

In S194 wird überprüft, ob die momentane Temperatur T, welche mit dem Sensor 152 gemessen wird, größer als die bisher maximale Temperatur OD_TM ist. Falls ja, so wird in S196 der bisherigen maximalen Temperatur OD_TM die neue maximale Temperatur T zugeordnet, und das Objekt OD_TMAX in der Objekttabelle 111 (Fig. 8) wird analog zu S192 durch den Befehl write_EE mit dem neuen Maximalwert OD_TM überschrieben. (Der Parameter pOD_TMAX gibt wieder an, an welcher Stelle das Objekt OD_TMAX im EEPROM 74 abgelegt ist.)

Im S198 werden die momentanen Betriebsstunden, welche sich in OD_OH befinden, mit dem Befehl write_EE in das Objekt OD_OHO (Fig. 8) des EEPROM 74 geschrieben, so daß sie auch beim Ausschalten des Lüfters 32 erhalten bleiben. Die Messung der Betriebsstunden OD_OH ist bei Fig. 14 erläutert.

In S200 wird die momentane Anzahl der Kommutierungen, welche in OD_COM abgelegt ist, durch den Befehl write_EE in das Objekt OD_COMMUT (Fig.

8) geschrieben. Die Messung der Zahl der Kommutierungen ist bei Fig. 13 erläutert.

In S202 wird das Anforderungsbit FCT_BDF auf Null zurückgesetzt, da die "Betriebsdatenfunktion" S638 vollständig abgearbeitet ist, und bei S204 endet die Funktion S638.

### Fehlererkennung

**Fig. 16** zeigt ein Flußdiagramm mit einem Ausschnitt der Funktion "A/D" S606 (Fig. 6).

In S220 wird das Potential am Eingang 57 des A/D-Wandlers 60 (Fig. 2) mit dem Befehl AD(AD_UB) eingelesen und in U_B gespeichert. Der Wert U_B entspricht der aktuellen Betriebsspannung UB, z.B. 40 V

In S222 wird das Potential am Eingang 67 des A/D-Wandlers 60 (Fig. 6) mit dem Befehl AD(AD_T) eingelesen und in T gespeichert. Der Wert T entspricht einer aktuellen Temperatur am NTC-Widerstand 62, z.B. 84° C.

In S224 werden ggf. weitere Schritte, z.B. eine Anforderung der "Kennlinienfunktion" S622, ausgeführt.

In S226 wird überprüft, ob ein Sensorabriß vorliegt, d.h. ob die Verbindung zum NTC-Widerstand 62 an der Stelle 62a oder 62b unterbrochen ist. Dies ist der Fall, wenn der Wert für T kleiner als ein Sensorabrißwert T_SI ist. In diesem Fall wird bei S228 der Temperaturwert T auf T_SI gesetzt, und der Aufruf einer Funktion NEW_DIST, welche bei Fig. 22 erläutert ist, wird vorbereitet. Hierzu werden die Fehlerklasse DS_µC und der Fehlercode DN_SENSOR_INTERRUPT für den Sensorkurzschlußfehler in den Variablen TEMP_CLASS bzw. TEMP_CODE gespeichert, und in S230 wird NEW_DIST (Fig. 22) aufgerufen.

In S232 wird analog auf einen Sensorkurzschluß geprüft, also in Fig. 2 einen Kurzschluß zwischen den Stellen 62a und 62b. Hierzu wird verglichen, ob der Wert T größer als ein Sensorkurzschlußwert T_SS ist. Falls ja, so wird in S234 der Wert T auf den Sensorkurzschlußwert T_SS gesetzt, die Variablen TEMP_CLASS und TEMP_CODE werden auf die Werte für den Sensorkurzschluß gesetzt, und in S236 wird NEW_DIST (Fig. 22) aufgerufen.

In S238 folgen ggf. weitere Schritte. Bei S240 endet die A/D-Routine.

Anstelle oder zusätzlich zu der Betriebsspannung U_B könnte auch eine andere Spannung, z.B. eine benutzte 12 V-Hilfsspannung, gemessen, werden, um ihren Extremwert zu speichern.

**Fig. 17** zeigt ein Flußdiagramm für die Funktion "Fehlererkennung" S634 (Fig. 6). Dies ist eine anforderbare Funktion, die mit dem Anforderungsbit FCT_DIST=1 angefordert werden muß. Sie wird nach dem Einschalten des Motors bei der Initialisierung (S600 in Fig. 6) angefordert, und danach etwa alle 100 ms durch ein Zeitglied, z.B. einen Zähler, der vom TIMERØ gesteuert wird. Die Fehlererkennung bewirkt also, daß alle 100 ms die Speicher überprüft werden.

In S272 wird eine Funktion "RAM_CHK_TEST", in S274 eine Funktion "ROM_CHK_TEST" und in S276 eine Funktion "EEPROM_CHK_TEST"ausgeführt. Diese Funktionen überprüfen, ob ein Fehler im RAM 97, ROM 96 oder EEPROM 74 aufgetreten ist. Es ist z.B. möglich, daß ein Bit im RAM 97 "umkippt". Dadurch kann es zu Fehlern im Programm des µC 23 und damit einem unsicheren Betrieb des Lüfters 32 kommen.

In S277 wird das Anforderungsbit FCT_DIST auf Null zurückgesetzt, da die Funktion "Fehlererkennung" S634 vollständig abgearbeitet ist.

Anhand der folgenden Figuren werden die Speichertests am Beispiel der Funktion "RAM_CHK_TEST" zum Testen des RAM 97 erläutert. Die Tests bei EEPROM 74 und ROM 96 verlaufen völlig analog.

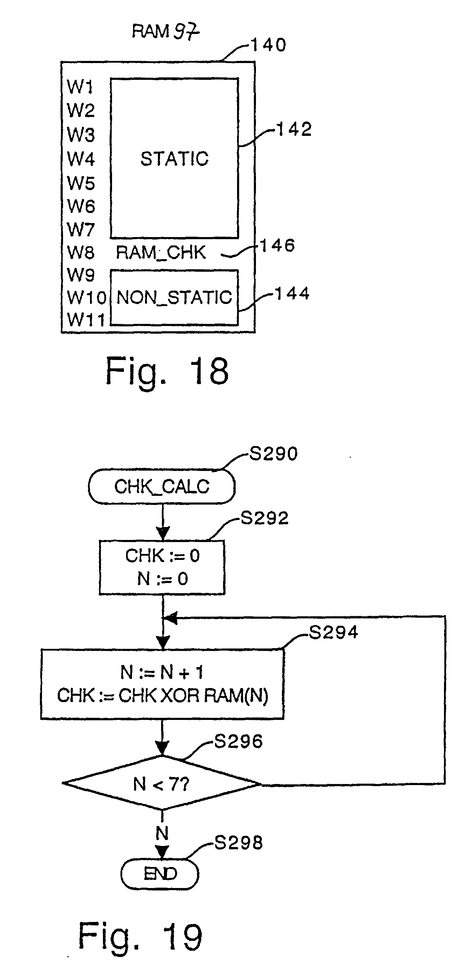

**Fig. 18** zeigt einen Bereich 140 des RAM 97. Dieser ist hier in einen statischen Bereich "STATIC" 142 und einen nichtstatischen (dynamischen) Bereich "NON_STATIC" aufgeteilt.

Zur Veranschaulichung werden Speicherworte W1 bis W11 durchnumeriert. Der Bereich "STATIC" 142 umfaßt die Speicherworte W1 bis W7. In dem Speicherwort W8 steht die Variable RAM_CHK 146, welche zur Überprüfung des Bereichs "STATIC" 142 dient. Im Bereich "STATIC" 142 stehen z.B. Funktionen und Konstanten. Der Bereich "NON_STATIC" 144 umfaßt die Speicherworte W9 bis W11 und enthält z.B. Variablen.

**Fig. 19** zeigt eine Funktion "CHK_CALC" S290, welche zur Berechnung eines Überprüfungswerts CHK dient. Hierfür wird in S292 CHK auf Null gesetzt, und ein Schleifenzähler N wird ebenfalls auf Null gesetzt.

In S294 beginnt eine Schleife. N wird jeweils um 1 erhöht, und es wird eine XOR-Operation von CHK und RAM(N) gemacht. RAM(N) ist dabei das Speicherwort im RAM-Bereich 140 (Fig. 18) an der Stelle WN. In S296 wird überprüft, ob N < 7 ist. Falls nein, so wurde ein XOR von CHK mit den Speicherworten W1 bis W7 und damit mit allen Speicherworten in dem Bereich "STATIC" 142 gemacht, und die Routine geht zum Schritt S298 (ENDE).

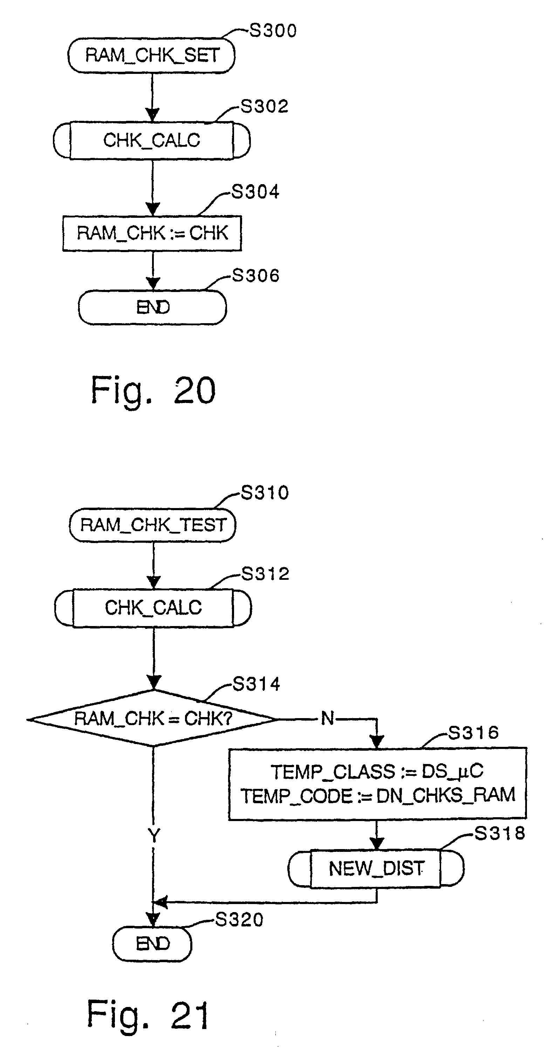

**Fig. 20** zeigt ein Flußdiagramm zu der Funktion "RAM_CHK_SET" S300, welche zum Setzen von RAM_CHK 146 (Fig. 18) verwendet wird.

In S302 wird die Funktion "CHK_CALC" (Fig. 19) aufgerufen, welche den Prüfwert CHK berechnet. Dieser wird in S304 in RAM_CHK 146 (Fig. 18) gespeichert, also im Wort W8 des RAM-Bereichs 140. Bei S306 endet die Routine.

Die Funktion "RAM_CHK_SET" wird z.B. nach jedem Reset des µC 23 in S600 (Fig. 6) aufgerufen. Falls während der Laufzeit ein Speicherwort im Bereich "STATIC" 142 (Fig. 18) gewollt verändert wird, muß "RAM_CHK_SET" S300 erneut aufgerufen werden. Im ROM 96 wird ein entsprechendes ROM_CHK-Überprüfungswort vor dem "Brennen" des ROM 96 berechnet und eingetragen.

**Fig. 21** zeigt ein Flußdiagramm der Funktion "RAM_CHK_TEST" (S272 in Fig. 17). In S312 wird wieder die Funktion "CHK_CALC" (S290 in Fig. 19) aufgerufen und der Überprüfungswert CHK berechnet.

In S314 wird CHK mit dem gespeicherten Wert RAM_CHK 146 (Fig. 18) verglichen. Sind die beiden Werte ungleich, so ist ein Fehler im Bereich "STATIC" 142 aufgetreten, und es wird nach S316 gesprungen. In S316 werden die Variablen TEMP_CLASS mit DS_µC und TEMP_CODE mit DN_CHKS_RAM belegt, und in S318 wird die Funktion "NEW_DIST" (Fig. 22) aufgerufen.

Sind in S314 die Werte RAM_CHK und CHK identisch, so springt die Routine direkt zu S320 (ENDE).

Die Speicherüberprüfungen von ROM 96 und EEPROM 74 funktionieren analog. Anstatt des XOR-Vertahrens kann z.B. auch ein Checksummenverfahren oder ein sonstiges Prüfverfahren, z.B. CRC (Cyclic Redundancy Check), verwendet werden.

**Fig. 22** zeigt ein Flußdiagramm der Funktion "NEW_DIST" S340, welche bei jedem detektierten Fehler aufgerufen wird.

In S342 wird überprüft, ob das Statuswortbit DS_ACTIVE = 1 ist, vgl. Fig. 10. Falls ja, so liegt bereits ein Fehler vor, es wird an das Ende S348 gesprungen, und der neue Fehler wird nicht beachtet. Dies ist deshalb sinnvoll, da ein Fehler Folgefehler hervorrufen kann. Zur Analyse ist deshalb der erste, alte Fehler der wichtigste.

Liegt in S342 ein *neuer* Fehler vor (DS_ACTIVE = 0), so wird nach S344 gesprungen. In S344 wird DS_ACTIVE (Fig. 10) auf 1 gesetzt, und die Fehlerklasse DS_CLASS und der Fehlercode DI_CODE werden auf die von der aufrufenden Funktion gesetzten Werte TEMP_CLASS bzw.

TEMP_CODE gesetzt. Z.B. zeigt Fig. 21, daß dort TEMP_CLASS auf DS_µC gesetzt wurde.

In S346 werden die Fehlerklasse DS_CLASS, der Fehlercode DI_CODE und die momentanen Betriebsdaten OD_DATA durch einen Befehl push_FIFO in einem FIFO im EEPROM 74 abgelegt. OD_DATA kann z.B. die momentane Temperatur, die momentanen Betriebsstunden, die momentane Anzahl der Kommutierungen, die Fehlerklasse, den Fehlercode und - falls eine Echtzeituhr 149 (Fig. 1) vorhanden ist - die momentane Uhrzeit und das momentane Datum enthalten.

Der Prozessor 23 setzt dann ein Statussignal, das von einem angeschlossenen PC 81 ständig geprüft wird und diesen veranlaßt, die gespeicherten Daten über den Fehler abzurufen. Sofern der Motor 32 durch den Fehler steht, z.B. weil sein Rotor 130 blockiert ist, kann durch den PC 81 ein Reservemotor (nicht dargestellt) eingeschaltet werden, oder es wird ein Alarm ausgelöst. Sofern es sich bei dem Motor 32 um einen Lüfter handelt, kann durch den PC 81 ein anderer Lüfter auf eine höhere Drehzahl umgeschaltet werden, um die Kühlung weiterhin zu gewährleisten.

**Fehlerfunktion (Fehlerüberwachungsroutine)**

**Fig. 23** zeigt ein Flußdiagramm der Fehlerfunktion S640 (Fig. 6), die auch als Fehlerüberwachungsroutine bezeichnet werden kann.

In S362 wird anhand von DS_ACTIVE (Fig. 10) überprüft bzw. überwacht, ob ein Fehler vorliegt. Ist DS_ACTIVE = 0, so liegt kein Fehler vor, und es wird an das Ende S390 gesprungen.

Ist DS_ACTIVE = 1, so liegt ein Fehler vor, und es wird eine Reaktion ausgeführt, welche durch den Wert VAL von DR_REAC (Fig. 12) bestimmt wird.

Ist DR_REAC = DR_OFF, so wird von S364 direkt nach S386 gesprungen, es geschieht keine Reaktion.

Ist DR_REAC = DR_n_max, so wird von S366 nach S368 gesprungen. In S368 wird n_const auf 1 gesetzt und damit der Funktion "Drehzahlberechnungsfunktion" S626 (Fig. 6) mitgeteilt, daß jetzt eine konstante Drehzahl vorgegeben ist. Weiterhin wird die Solldrehzahl n_s auf eine maximale Drehzahl n_max gesetzt. Dabei wird das Tastverhältnis PWM_TV der Impulse 107A (Fig. 2) auf 100 % eingestellt.

Ist in S370 DR_REAC = DR_n_min, so wird in S372 n_const auf 1 und die Solldrehzahl n_s auf eine minimale Drehzahl n_min gesetzt. Diese Drehzahl wird dann dem Regler 70 als Solldrehzahl vorgegeben.

Ist in S374 DR_REAC = DR_n_0, so wird in S376 n_const auf 1 und die Solldrehzahl n_s auf 0 gesetzt. Hierzu werden in Fig. 2 die Transistoren 114, 116, 118, 120 nichtleitend gemacht, so daß der Motor 32 keinen Strom mehr erhält.

Ist in S378 DR_REAC = DR_n_DIST, so wird in S380 n_const auf 1 und die Solldrehzahl n_s auf die Fehlerdrehzahl n_DIST gesetzt, welche durch das Objekt n_DIST (Fig. 8) gegeben ist. Diese Drehzahl n_DIST wird dann dem Regler 70 als Solldrehzahl n_s zugeführt.

Ist in S382 DR_REAC = DR_BRAKE, so wird in S384 n_const auf 1 gesetzt, die Solldrehzahl n_s auf 0 und BRAKE auf 1, um der Funktion "RGL" S610 (Fig. 6) anzuzeigen, daß aktiv gebremst werden soll. In diesem Fall werden z.B. die beiden unteren Transistoren 118, 120 der H-Brücke 112 (Fig. 2) ständig leitend gesteuert, so daß die Statorwicklung 128 kurzgeschlossen wird. Dabei sind die oberen Transistoren 114, 116 geöffnet.

Nach dem Prüfen von DR_REAC in S364 bis S382 wird in S386 anhand von DR_AL (Fig. 12) geprüft, ob bei einem Fehler ein Alarm ausgelöst werden soll.

Ist DR_AL = DR_AL_ON, so wird in S388 das Statuswort AS_DIST auf 1 gesetzt, um so der Alarmfunktion S642 (Fig. 6) mitzuteilen, daß ein Fehler vorliegt und ein Alarm ausgelöst werden soll. Anschließend geht die Routine zu S390 (ENDE).

### Kommunikationsfunktion (Fig. 24)

**Fig. 24** zeigt ein Flußdiagramm der Funktion "COMM" S604 (Fig. 6). Sie steuert Ein- und Ausgabe über den Bus 82. (Die Schritte S402, S406 und S430 symbolisieren mögliche weitere Programmteile, d.h. Fig. 24 stellt gewöhnlich nur den hier wichtigen Ausschnitt aus der Funktion "COMM" S604 dar, um unnötige Längen zu vermeiden.)

Ab S404 beginnt der Teil PROCESS_INSTR, in dem Befehle ausgeführt werden, welche die Funktion "COMM" über den seriellen Bus 82, hier einen IIC-Bus, erhalten hat, und welche in INSTR stehen.

Die definierten Befehle beginnen mit OC. OC_GETDI bedeutet z.B., daß das Statuswort DI_STATE (Fig. 10) und der Fehlercode DI_CODE (Fig. 11) von außerhalb abgefragt werden. In S410 wird überprüft, ob INSTR = OC_GETDI ist. Falls ja, wird in S412 mit dem Befehl write_IIC die gewünschte Information auf den IIC-Bus 82 ausgegeben. OC_DIDAT bedeutet, daß es sich um die Fehlerdaten handelt, und "2", daß zwei weitere Argumente folgen, nämlich DI_STATE und DI_CODE.

In S414 wird verglichen, ob INSTR = OC_RESDI ist, und ggf. nach S416 gesprungen. OC_RESDI bedeutet, daß ein Reset der Fehlerfunktion stattfinden soll. Ein eventuell in DI_STATE, DI_CODE gespeicherter Fehler soll also gelöscht werden. In S416 werden DI_STATE und DI_CODE zurückgesetzt. Mit DI_STATE werden gleichzeitig DS_CLASS und DS_ACTIVE zurückgesetzt (Fig. 10).

In S418 wird überprüft, ob INSTR = OC_GETOD ist, und ggf. nach S420 gesprungen. OC_GETOD bedeutet, daß über den Bus 82 die Betriebsdaten der Funktion "Betriebsdatenfunktion" (Fig. 15) abgerufen werden. In S420 werden die Betriebsdaten mit dem Befehl write_IIC auf den IIC-Bus 82 geschrieben. Hierbei bedeutet OC_ODDAT, daß es sich um Daten der Funktion "Betriebsdatenfunktion" (Fig. 15) handelt, "4", daß vier weitere Argumente folgen, und zwar OD_UBM, OD_TM, OD_OH und OD_COM, vgl. Fig. 15.

In S422 wird INSTR mit OC_GETFIFO verglichen und bei Gleichheit nach S424 gesprungen. OC_GETFIFO bedeutet, daß die nächsten Werte aus dem FIFO, welcher bei jedem neuen Fehler mit der Fehlerklasse, dem Fehlercode und den momentanen Betriebsdaten gefüllt wird (Fig. 22), ausgelesen werden. Hierzu werden in S424 die nächsten Daten aus dem FIFO geholt und in die Variablen TMP_CLASS, TMP_CODE und TMP_DATA geschrieben. Daraufhin werden diese Daten mittels write_IIC auf den Bus 82 geschrieben. Hierbei zeigt OC_FIFO an, daß es sich um Daten aus dem FIFO handelt, und "3" gibt die Anzahl der weiteren Parameter TMP_CLASS, TMP_CODE und TMP_DATA an.

Mit S430 sind mögliche weitere Schritte angedeutet, und bei S432 endet die Routine COMM, welche gemäß Fig. 6 eine hohe Priorität L3 hat.

Bei der vorliegenden Erfindung ist also eine Vielzahl von Routinen unterschiedlicher Priorität (Fig. 6: L1 bis L23) vorgesehen, und wenn bei ihrer Ausführung ein Fehler festgestellt wird, werden als erstes "Akutmaßnahmen" getroffen. Wenn z.B. bei der A/D-Routine der Fig. 16 bei S226 festgestellt wird, daß in der Zuleitung zum Sensor 152 eine Unterbrechung vorliegt, wird bei S228 als erstes die entsprechende Fehlerklasse und der entsprechende Fehlercode gespeichert, und anschließend wird das Programm NEW_DIST der Fig. 22 durchlaufen. Wenn nicht bereits ein anderer Fehler vorliegt, wird dort DS_ACTIVE gesetzt. Fehlerklasse und Fehlercode werden im nichtflüchtigen Speicher 74 gespeichert, um permanente Informationen über die Art des Fehlers zu haben, und ebenso werden alle relevanten Betriebsdaten im Speicher 74 gespeichert. Anschließend läuft zunächst die Routine gemäß Fig. 16 weiter ab.

Irgendwann gelangt dann das Programm in Fig. 6 zur Fehlerfunktion S640, die in Fig. 23 dargestellt ist.

In der Fehlerfunktion wird festgestellt, daß DS_ACTIVE gesetzt ist, und entsprechend den Parametern im Wort DIST_REAC der Objekttabelle 111 (diese Parameter befinden sich während des Betriebs des Motors auch im RAM 97) wird nun auf den Fehler reagiert. Diese Parameter sind in Fig. 12 dargestellt. Wenn es sich um einen Lüfter handelt, wird DR_REAC (Fig. 12) gewöhnlich den Wert 1 haben, d.h. die Drehzahl des Motors 32 wird bei einem Fehler des Temperatursensors 152 auf den Maximalwert eingestellt, damit eine sichere Lüftung gewährleistet ist. Dies geschieht in den Schritten S366 und S368 der Fig. 23. Sobald man also die Verbindung zum Sensor 152 unterbricht, wird innerhalb kürzester Zeit der Motor 32 auf seine maximale Drehzahl umgeschaltet.

Möchte man das nicht, z.B., weil der Lüfter dann sehr laut wird, so kann man im Wert n_DIST der Objekttabelle 111 eine bestimmte Drehzahl speichern, z.B. 2500 U/min, und man wählt dann in Fig. 12 für DR_REAC den Wert 4, also DR_n_DIST. Die Fehlerfunktion (Fig. 23) geht dann bei einem Fehler zu den Schritten S378 und S380 und schaltet den Motor 32 bei Feststellung eines Fehlers auf eine konstante Drehzahl von 2500 U/min. Diese Drehzahl kann bei der Parametrierung des Motors frei gewählt werden, und sie kann auch nachträglich geändert werden, wenn der Benutzer die geeignete Software hat.

In gleicher Weise kann man in Fig. 12 durch die Größe DR_AL festlegen, ob ein Alarm ausgegeben werden soll oder nicht. Hat dort DR_AL den Wert 1, so wird durch die Schritte S386 und S388 der Fig. 23 ein Alarm ausgelöst.

Man kann also bei einem Motor in einfacher Weise parametrieren, ob und wie er reagieren soll, wenn ein Fehler festgestellt wird. In jedem Fall hat man im EEPROM 74 gespeicherte Daten, welche Fehlerklasse, Fehlercode, und die zugehörigen Motordaten zum Zeitpunkt des Fehlers enthalten, z.B. Betriebsstunden, maximale Betriebsspannung, maximale Temperatur, ggf. Uhrzeit, Datum etc., so daß die nachträgliche Analyse eines aufgetretenen Fehlers wesentlich erleichtert bzw. überhaupt möglich gemacht wird.

Die Arbeitsweise bei Auftreten eines Fehlers kann man mit der Versorgung eines Verunglückten vergleichen: Zuerst kommt der Sanitäter, macht einen Notverband und schreibt ein paar Daten auf, die er als Etikett am Patienten festklebt. Dies entspricht der Ermittlung des Fehlers und der Speicherung der Betriebsdaten, z.B. in der Routine A/D (Fig. 16) oder in der Routine Fehlererkennung (Fig. 17). Anschließend setzt der Sanitäter die Flagge DS-ACTIVE=1 und läßt den Verunglückten liegen, bis eine Ambulanz kommt.

Das Programm Fehlerfunktion (Fig. 23), also die Fehlerüberwachungsroutine, entspricht der Ambulanz. Diese fährt irgendwann vorbei und erkennt den Verunglückten an der Flagge DS_ACTIVE=1, lädt ihn auf, und verarztet ihn entsprechend den gespeicherten Hinweisen.

Ein solches System ist sehr offen und in jeder Richtung erweiterbar und änderbar, weil Änderungen nicht das Programm betreffen, sondern nur die Daten in der Objekttabelle 111 (Fig. 8). In jedem Fall kommt zuerst der Sanitäter, führt vorgegebene Schritte durch, und anschließend kommt die Ambulanz und führt ebenfalls vorgegebene Schritte durch. Und diese vorgegebenen Schritte sind im Speicher 74 parametrierbar.

Durch die Erfindung ergibt sich auch der Vorteil, daß man aufgrund objektiver Daten entscheiden kann, ob ein Motor das Ende seiner Lebensdauer erreicht hat und vorsorglich ersetzt werden sollte.

Ein geeigneter zeitlicher Abstand für die Übertragung der Variablen der Betriebsdaten in den nichtflüchtigen Speicher sind z.B. Stundenbruchteile, z.B. 10 Minuten, 20 Minuten, 30 Minuten oder dergleichen. Die Übertragung kann also relativ selten stattfinden und erfordert deshalb nicht viel Rechenzeit. Trotzdem ergibt sich eine gute Genauigkeit der im nichtflüchtigen Speicher gespeicherten Daten, da Elektromotoren meist längere Zeit ununterbrochen laufen und sich dabei ihre Betriebsdaten nur wenig ändern.

Eine weitere Möglichkeit, die aktuellen Variablen als Alt-Betriebsdatenwerte in den nichtflüchtigen Speicher 74 zu sichern, besteht bei Mikroprozessoren 23, welche bei einem Reset, der z.B. bei einem Stromausfall oder einem Ausschalten des Elektromotors 32 auftritt, noch Abschlußroutinen durchführen können. In diesen Abschlußroutinen kann die aktuelle Variable in den nichtflüchtigen Speicher gespeichert werden, und es ist nicht mehr eine häufigere Zwischenabspeicherung notwendig.

Naturgemäß sind im Rahmen der vorliegenden Erfindung vielfache Abwandlungen und Modifikationen möglich.

**Patentansprüche**

1. Verfahren zum nichtflüchtigen Speichern mindestens eines Betriebsdatenwerts eines Elektromotors (32), welcher einen seine Kommutierung steuernden Mikroprozessor oder Mikrocontroller (23), im folgenden Mikroprozessor genannt, und einen dem mikroprozessor (23) zugeordneten nichtflüchtigen Speicher (74) aufweist, mit folgenden Schritten:

   Beim Einschalten des Motors (32) wird ein Alt-Betriebsdatenwert aus dem nichtflüchtigen Speicher (74) in einen dem Mikroprozessor (23) zugeordneten flüchtigen Speicher (97) übertragen und dort als Variable gespeichert; die Variable wird vom Mikroprozessor (23) zu vorgegebenen Zeitpunkten aktualisiert; in zeitlichen Abständen wird der im nichtflüchtigen Speicher (74) gespeicherte Betriebsdatenwert durch den aktuellen Wert dieser Variablen ersetzt.

2. Verfahren nach Anspruch 1, bei welchem die vorgegebenen Zeitpunkte in den Zeitbereichen zwischen den Kommutierungsvorgängen liegen.

3. Verfahren nach Anspruch 1 oder 2, bei welchem der Alt-Betriebsdatenwert nach einem Reset aus dem nichtflüchtigen Speicher (74) in den dem Mikroprozessor (23) zugeordneten flüchtigen Speicher (97) übertragen und dort als Variable gespeichert wird.

4. Verfahren nach einem oder mehreren der vorhergehenden Ansprüche, bei welchem der aktuelle Wert der Variablen bei einem Resetvorgang als Alt-Betriebsdatenwert in den nichtflüchtigen Speicher (74) übertragen wird.

5. Verfahren nach einem oder mehreren der vorhergehenden Ansprüche, bei welchem der im nichtflüchtigen Speicher (74) gespeicherte Betriebsdatenwert über eine Datenverbindung (82) abfragbar ist.

6. Verfahren nach Anspruch 5, bei welchem die Abfrage des in dem nichtflüchtigen Speicher (74) gespeicherte Betriebsdatenwert über die Datenverbindung (82) durch den Mikroprozessor (23) gesteuert wird.

7. Verfahren nach einem oder mehreren der vorhergehenden Ansprüche, bei welchem dem Motor ein Temperatursensor (152) zugeordnet ist, und bei welchem ein Extremwert (OD_TM) der von diesem Temperatursensor (152) erfaßten Temperatur (T) als Betriebsdatenwert (Fig. 8: OD_TMAX) im nichtflüchtigen Speicher (74) gespeichert wird.

8. Verfahren nach einem oder mehreren der vorhergehenden Ansprüche, bei welchem der Motor (32) einen A/D-Wandler aufweist, mit welchem eine analoge Spannung in einen digitalen Wert umsetzbar ist, und bei welchem ein Extremwert (OD_UBM) der von diesem A/D-Wandler umgesetzten Spannung als Betriebsdatenwert (Fig. 8: OD_UBMAX) im nichtflüchtigen Speicher (74) gespeichert wird.

9. Verfahren nach einem oder mehreren der vorhergehenden Ansprüche, bei welchem ein der Anzahl der Kommutierungen entsprechender Wert (OD_COMM) als Betriebsdatenwert (Fig. 8: OD_COMMUT) im nichtflüchtigen Speicher (74) gespeichert wird.

10. Verfahren nach einem oder mehreren der vorhergehenden Ansprüche, bei welchem die Betriebsdauer (OD_OH) des Motors (32) nach Art eines Betriebsstundenzählers als Betriebsdatenwert (Fig. 8: OD_OHO) im nichtflüchtigen Speicher (74) gespeichert wird.

11. Verfahren nach einem oder mehreren der vorhergehenden Ansprüche, bei welchem beim Start des Motors (32) mehrere Betriebsdatenwerte aus dem nichtflüchtigen Speicher (74) in zugeordnete Variablen eines dem Mikroprozessor (23) zugeordneten flüchtigen Speichers (RAM 97) geladen und anschließend durch den Mikroprozessor (23) aktualisiert werden.

12. Elektromotor, welcher einen seine Kommutierung steuernden Mikroprozessor oder Mikrocontroller (23), im folgenden Mikroprozessor genannt, und einen dem Mikroprozessor zugeordneten flüchtigen Speicher (97) aufweist,
**gekennzeichnet durch** einen dem Mikroprozessor (23) zugeordneten nichtflüchtigen Speicher (74) und ein Programm zum nichtflüchtigen Speichern mindestens eines Betriebsdatenwertes des Elektromotors, welches folgende Schritte aufweist:

Beim Einschalten des Motors (32) wird ein Alt-Betriebsdatenwert aus dem nichtflüchtigen Speicher (74) in den dem Mikroprozessor (23) zugeordneten flüchtigen Speicher (97) übertragen und dort als Variable gespeichert;
die Variable wird vom Mikroprozessor (23) zu vorgegebenen Zeitpunkten aktualisiert;
in zeitlichen Abständen wird der im nichtflüchtigen Speicher (74) gespeicherte Betriebsdatenwert **durch** den aktuellen Wert dieser Variablen ersetzt.

13. Elektromotor nach Anspruch 12, bei welchem eine Daten-Sammelleitung (82) vorgesehen ist, über welche ein Zugriff auf die im nichtflüchtigen Speicher (74) gespeicherten Daten und/oder ein Speichern von Daten in diesem Speicher (74) möglich ist.

## Claims

1. Method for non-volatile storage of at least one operating data value of an electric motor (32) which comprises a microprocessor or microcontroller (23) controlling its commutation, referred to in the following as a microprocessor, and a non-volatile memory (74) associated with the microprocessor (23), with the following steps:

when the motor (32) is switched on, an old operating data value is transferred from the non-volatile memory (74) to a volatile memory (97) associated with the microprocessor (23) and stored there as a variable;
the variable is updated by the microprocessor (23) at predetermined points in time;
at intervals of time the operating data value stored in the non-volatile memory (74) is replaced by the latest value of this variable.

2. Method according to claim 1, wherein the predetermined points in time lie in the time ranges between the commutation operations.

3. Method according to claim 1 or 2, wherein after a reset the old operating data value is transferred from the non-volatile memory (74) to the volatile memory (97) associated with the microprocessor (23) and stored there as a variable.

4. Method according to one or more of the preceding claims, wherein during a reset operation the latest value of the variable is transferred as old operating data value to the non-volatile memory (74).

5. Method according to one or more of the preceding claims, wherein the operating data value stored in the non-volatile memory (74) can be interrogated by means of a data link (82).

6. Method according to claim 5, wherein the interrogation of the operating data value stored in the non-volatile memory (74) by means of the data link (82) is controlled by the microprocessor (23).

7. Method according to one or more of the preceding claims, wherein the motor has an associated temperature sensor (152), and wherein an extreme value (OD_TM) of the temperature (T) detected by this temperature sensor (152) is stored in the non-volatile memory (74) as operating data value (fig. 8: OD_TMAX).

**8.** Method according to one or more of the preceding claims, wherein the motor (32) comprises an A/D converter with which an analogue voltage can be converted into a digital value, and wherein an extreme value (OD_UBM) of the voltage converted by this A/D converter is stored in the non-volatile memory (74) as operating data value (fig. 8: OD_UBMAX).

**9.** Method according to one or more of the preceding claims, wherein a value (OD_COMM) corresponding to the number of commutations is stored in the non-volatile memory (74) as operating data value (fig. 8: OD_COMMUT).

**10.** Method according to one or more of the preceding claims, wherein the operating time (OD_OH) of the motor (32) is stored in the non-volatile memory (74) as operating data value (fig. 8: OD_OHO) in the manner of an operating hours counter.

**11.** Method according to one or more of the preceding claims, wherein when the motor (32) is started, a plurality of operating data values from the non-volatile memory (74) are loaded into associated variables of a volatile memory (RAM 97) associated with the microprocessor (23) and then updated by the microprocessor (23).

**12.** Electric motor which comprises a microprocessor or microcontroller (23) controlling its commutation, referred to in the following as a microprocessor, and a volatile memory (97) associated with the microprocessor, **characterised by** a non-volatile memory (74) associated with the microprocessor (23), and a programme for non-volatile storage of at least one operating data value of the electric motor, which comprises the following steps:

when the motor (32) is switched on, an old operating data value is transferred from the non-volatile memory (74) to the volatile memory (97) associated with the microprocessor (23) and stored there as a variable;
the variable is updated by the microprocessor (23) at predetermined points in time;
at intervals of time the operating data value stored in the non-volatile memory (74) is replaced by the latest value of this variable.

**13.** Electric motor according to claim 12, wherein a data bus (82) is provided by means of which access to the data stored in the non-volatile memory (74) and/or storage of data in this memory (74) is possible.

**Revendications**

**1.** Procédé pour la mémorisation non volatile d'au moins une valeur de données de fonctionnement d'un moteur électrique (32), lequel présente un microprocesseur ou microcontrôleur (23) pour la commande de sa commutation, appelé dans la suite microprocesseur, et une mémoire non volatile (74) associée au microprocesseur (23), fonctionnant selon les étapes suivantes :

à la mise sous tension du moteur (32), une ancienne valeur de données de fonctionnement est transférée de la mémoire non volatile (74) dans une mémoire volatile (97) associée au microprocesseur (23) où elle est stockée en tant que variable ;
la variable est actualisée par le microprocesseur (23) à des instants prédéfinis ;
la valeur de données de fonctionnement stockée dans la mémoire non volatile (74) est remplacée à intervalles temporels par la valeur actuelle de cette variable.

**2.** Procédé selon la revendication 1 dans lequel les instants prédéfinis se situent dans les plages de temps comprises entre les commutations.

**3.** Procédé selon la revendication 1 ou 2 dans lequel le transfert de l'ancienne valeur de données de fonctionnement de la mémoire non volatile (74) dans la mémoire volatile (97) associée au microprocesseur (23) où elle est stockée en tant que variable intervient après une réinitialisation.

**4.** Procédé selon une ou plusieurs des revendications précédentes dans lequel la valeur actuelle de la variable est transférée dans la mémoire non volatile (74) en tant qu'ancienne valeur de données de fonctionnement lors d'une réinitialisation.

**5.** Procédé selon une ou plusieurs des revendications précédentes dans lequel la valeur de données de fonctionnement stockée dans la mémoire non volatile (74) est interrogeable via une liaison de données (82).

**6.** Procédé selon la revendication 5 dans lequel l'interrogation de la valeur de données de fonctionnement stockée dans la mémoire non volatile (74) est commandée par le microprocesseur (23) via la liaison de données (82).

**7.** Procédé selon une ou plusieurs des revendications précédentes dans lequel une sonde de température (152) est associée au moteur et dans lequel une valeur extrême (OD_TM) de la température (T) enregistrée par cette sonde de température (152) est stockée en tant que valeur de données de fonctionnement (fig. 8 : OD_TMAX) dans la mémoire non volatile (74).

8. Procédé selon une ou plusieurs des revendications précédentes dans lequel le moteur (32) présente un convertisseur A/N permettant de convertir une tension analogique en valeur numérique et dans lequel une valeur extrême (OD_UBM) de la tension convertie par ce convertisseur A/N est stockée en tant que valeur de données de fonctionnement (fig. 8 : OD_UBMAX) dans la mémoire non volatile (74).

9. Procédé selon une ou plusieurs des revendications précédentes dans lequel une valeur (OD_COMM) correspondant au nombre de commutations est stockée en tant que valeur de données de fonctionnement (fig. 8 : OD_COMMUT) dans la mémoire non volatile (74).

10. Procédé selon une ou plusieurs des revendications précédentes dans lequel la durée de fonctionnement (OD_OH) du moteur (32) est stockée, à la manière d'un compteur d'heures de fonctionnement, en tant que valeur de données de fonctionnement (fig. 8 : OD_OHO) dans la mémoire non volatile (74).

11. Procédé selon une ou plusieurs des revendications précédentes dans lequel, au démarrage du moteur (32), plusieurs valeurs de données de fonctionnement sont chargées depuis la mémoire non volatile (74) dans des variables associées d'une mémoire volatile (RAM 97) associée au microprocesseur (23) puis actualisées par le microprocesseur (23).

12. Moteur électrique qui présente un microprocesseur ou microcontrôleur (23) pour la commande de sa commutation, appelé dans la suite microprocesseur, et une mémoire volatile (97) associée au microprocesseur,
**caractérisé par** une mémoire non volatile (74) associée au microprocesseur (23) et un programme pour la mémorisation non volatile d'au moins une valeur de données de fonctionnement du moteur électrique, lequel présente les étapes suivantes :

à la mise sous tension du moteur (32), une ancienne valeur de données de fonctionnement est transférée de la mémoire non volatile (74) dans la mémoire volatile (97) associée au microprocesseur (23) où elle est stockée en tant que variable ;
la variable est actualisée par le microprocesseur (23) à des instants prédéfinis ;
la valeur de données de fonctionnement stockée dans la mémoire non volatile (74) est remplacée à intervalles temporels par la valeur actuelle de cette variable.

13. Moteur électrique selon la revendication 12 dans lequel il est prévu un bus de données (82) qui permet d'accéder aux données stockées dans la mémoire non volatile (74) et/ou de stocker des données dans cette mémoire (74).

Fig. 1

Fig. 2

Fig.3A

Fig.3B

Fig.3C

$$PWM\_TV = \frac{t_{ON}}{T}$$

EP 1 181 628 B1

611 = HALL_INTERRUPT

Fig. 4

Fig. 5

Fig. 6

| Bit7 | Bit6 | Bit5 | Bit4 | Bit3 | Bit2 | Bit1 | Bit0 |
|------|------|------|---------|----------|----------|-------|--------|
| X | X | X | FCT_BDF | FCT_DIST | FCT_AL_n | FCT_n | FCT_KL |

MSB

LSB

605

## Fig. 7

EP 1 181 628 B1

Objecttable ⌐111

| Index | Memorytype | Access | Name |
|-------|-----------|--------|------|
| 0x20 | unsigned8 | R/W | DIST_CTRL |
| 0x21 | unsigned8 | R/W | DIST_STATE |
| 0x22 | unsigned16 | R/W | DIST_CODE |
| 0x23 | unsigned8 | R/W | DIST_REAC |
| 0x24 | unsigned8 | R/W | n_DIST |
| 0x25 | unsigned8 | R/W | t_COMM_TO |
| 0x30 | unsigned8 | R/W | OD_TMAX |
| 0x31 | unsigned8 | R/W | OD_UBMAX |
| 0x32 | unsigned24 | R/W | OD_OHO |
| 0x33 | unsigned24 | R/W | OD_COMMUT |

# Fig. 8

DI_CTRL

| Bit | Name | LOW | HIGH |
|-----|------|-----|------|
| 0 | DC_LATCH | NO_LATCH | LATCH |
| 1-6 | RES | | |
| 7 | DC_CLEAR | 0 -> 1 -> 0 to clear | |

# Fig. 9

DI_STATE

| Bit | Name | VAL | Meaning |
|-----|------|-----|---------|
| 0-2 | DS_CLASS | 0 | DS_$\mu$C |
| | | 1 | DS_COMM |
| | | 2 | DS_SENS |
| | | 3 | DS_HW |
| | | 4-7 | RES |
| 3-6 | RES | | |
| 7 | DS_ACTIVE | 0 | NO_DIST |
| | | 1 | DIST |

# Fig. 10

DI_CODE (16 Bit)

| Class | VAL | Name |
|---|---|---|
| DS_μC | 0-999 | |
| | 0 | DN_WDT |
| | 1 | DN_CHKS_ROM |
| | 2 | DN_CHKS_RAM |
| | 3 | DN_CHKS_EEPROM |
| | 4 | DN_TEST_RAM |
| | 5-999 | RES |
| DS_COMM | 1000-1999 | |
| | 1000 | DN_TIMEOUT_TRANSFER |
| | 1001 | DN_TIMEOUT_BUS |
| | 1002 | DN_PROT_ERR |
| | 1003 | DN_INVAL_DATA |
| | 1004-1999 | RES |
| DS_SENSOR | 2000-2999 | |
| | 2000 | DN_SENSOR_INTERRUPT |
| | 2001 | DN_SENSOR_SHORT |
| | 2002-2999 | RES |
| DS_HW | 3000-3999 | |
| | 3000 | DN_DRIVER_FAULT |
| | 3001-3999 | RES |
| RES | 4000-65535 | |

# Fig. 11

DI_REAC

| Bit | Name | VAL | Meaning |
|---|---|---|---|
| 0-2 | DR_REAC | 0 | DR_OFF |
| | | 1 | DR_n_max |
| | | 2 | DR_n_min |
| | | 3 | DR_n_0 |
| | | 4 | DR_n_DIST |
| | | 5 | DR_BRAKE |
| | | 6-7 | RES |
| 3 | DR_AL | 0 | DR_AL_OFF |
| | | 1 | DR_AL_ON |
| 4-7 | RES | | |

# Fig. 12

Fig. 13

S173

( TIMERØ-Interrupt )

S174

| ... |

S175

( 10 min - Subtimer )

S176

| CNT_TI := CNT_TI + 1 |

S178

CNT_TI > 2399999?  —Y→

S180

| CNT_TI := 1 |
| OD_OH := OD_OH + 1 |
| FCT_BDF := 1 |

N

S182

( END )

# Fig. 14

S638

BDF

S190

U_B > OD_UBM? —Y→

S192

OD_UBM := U_B
write_EE(pOD_UBMAX, OD_UBM)

N

S194

T > OD_TM? —Y→

S196

OD_TM := T
write_EE(pOD_TMAX, OD_TM)

N

S198

write_EE(pOD_OHO, OD_OH)

S200

write_EE(pOD_COMMUT, OD_COM)

S202

FCT_BDF := 0

S204

END

# Fig. 15

S606
A/D

S220
U_B := AD(AD_UB)

S222
T := AD(AD_T)

S224
...

S226
T < T_SI?

—Y→

S228
T := T_SI
TEMP_CLASS := DS_μC
TEMP_CODE := DN_SENSOR_INTERRUPT

S230
NEW_DIST

N

S232
T > T_SS?

—Y→

S234
T := T_SS
TEMP_CLASS := DS_μC
TEMP_CODE := DN_SENSOR_SHORT

S236
NEW_DIST

N

S238
...

S240
END

# Fig. 16

S634

S272

RAM_CHK_TEST

S274

ROM_CHK_TEST

S276

EEPROM_CHK_TEST

S277

FCT_DIST := 0

S278

END

Fig. 17

RAM 97

W1
W2
W3
W4    STATIC    —142
W5
W6
W7
W8    RAM_CHK    —146
W9
W10   NON_STATIC    —144
W11

—140

## Fig. 18

CHK_CALC    —S290

CHK := 0
N := 0    —S292

N := N + 1
CHK := CHK XOR RAM(N)    —S294

N < 7?    —S296

N

END    —S298

## Fig. 19

S300

RAM_CHK_SET

S302

CHK_CALC

S304

RAM_CHK := CHK

S306

END

# Fig. 20

S310

RAM_CHK_TEST

S312

CHK_CALC

S314

RAM_CHK = CHK?

N

S316

TEMP_CLASS := DS_µC
TEMP_CODE := DN_CHKS_RAM

S318

NEW_DIST

Y

S320

END

# Fig. 21

S340

NEW_DIST

S342

DS_ACTIVE = 1?  — Y

N

S344

DS_ACTIVE := 1
DS_CLASS := TEMP_CLASS
DI_CODE := TEMP_CODE

S346

push_FIFO(DS_CLASS,
DI_CODE, OD_DATA)

S348

END

Fig. 22

S640

S362
DS_ACTIVE = 1? ——— N ———→

Y

S364
DR_REAC=DR_OFF? ——— Y ———→

N

S366
DR_REAC = DR_n_max? —Y→ S368
n_const := 1
n_s := n_max

N

S370
DR_REAC = DR_n_min? —Y→ S372
n_const := 1
n_s := n_min

N

S374
DR_REAC = DR_n_0? —Y→ S376
n_const := 1
n_s := 0

N

S378
DR_REAC = DR_n_DIST? —Y→ S380
n_const := 1
n_s := n_DIST

N

S382
DR_REAC = DR_BRAKE? —Y→ S384
n_const := 1
n_s := 0
BRAKE := 1

N

S386
DR_AL = DR_AL_ON? —Y→ S388
AS_DIST := 1

N

RET — S390

# Fig. 23

S604

COMM

S402

...

S404

PROCESS_INSTR

S406

...

S410

INSTR = OC_GETDI? ──Y──► write_IIC(OC_DIDAT, 2, DI_STATE, DI_CODE) ─── S412

N

S414

INSTR = OC_RESDI? ──Y──► DI_STATE := 0  DI_CODE := 0 ─── S416

N

S418

INSTR = OC_GETOD? ──Y──► write_IIC(OC_ODDAT, 4, OD_UBM, OD_TM, OD_OH, OD_COM) ─── S420

S422

INSTR = OC_GETFIFO? ──Y──► pull_FIFO(TMP_CLASS, TMP_CODE, TMP_DATA)  write_IIC(OC_FIFO, 3, TMP_CLASS, TMP_CODE, TMP_DATA) ─── S424

S430

...

S432

END

Fig. 24